(19)

Europäisches Patentamt

European Patent Office

Office européen des brevets

(11) **EP 4 553 972 A1**

(12) **EUROPEAN PATENT APPLICATION**

(43) Date of publication:
14.05.2025 Bulletin 2025/20

(21) Application number: 24211555.8

(22) Date of filing: 07.11.2024

(51) International Patent Classification (IPC):
$H01M\ 50/15^{(2021.01)}$    $H01M\ 50/166^{(2021.01)}$
$H01M\ 50/176^{(2021.01)}$    $H01M\ 50/186^{(2021.01)}$
$H01M\ 50/55^{(2021.01)}$    $H01M\ 50/553^{(2021.01)}$

(52) Cooperative Patent Classification (CPC):
H01M 50/55; H01M 50/15; H01M 50/166;
H01M 50/176; H01M 50/186; H01M 50/553

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 08.11.2023 KR 20230153866
31.05.2024 KR 20240071771
05.08.2024 KR 20240104208

(71) Applicant: **LG Energy Solution, Ltd.**
**Seoul 07335 (KR)**

(72) Inventors:
• **LEE, Ji Sun**
34122 Daejeon (KR)
• **KIM, Sang Hun**
34122 Daejeon (KR)
• **YU, Hyung Kyun**
34122 Daejeon (KR)
• **LEE, Jae Ho**
34122 Daejeon (KR)
• **CHOI, Ji Eun**
34122 Daejeon (KR)

(74) Representative: **Goddar, Heinz J.**
**Boehmert & Boehmert**
**Anwaltspartnerschaft mbB**
**Pettenkoferstrasse 22**
**80336 München (DE)**

(54) **SECONDARY BATTERY, METHOD OF MANUFACTURING THE SAME AND BATTERY PACK INCLUDING THE SAME**

(57) The present invention relates to a secondary battery, a method for manufacturing the same, and a battery pack including the same. The secondary battery according to an aspect of the present invention may include: an electrode assembly extending in one direction; an exterior film configured to surround a portion of the electrode assembly; and a cap configured to surround a remaining portion of the electrode assembly, wherein the cap may include: a cover part configured to cover one side in an extension direction of the electrode assembly; a connection part including a coupling portion which is provided on an outer surface of the cover part and is coupled to the exterior film; and a terminal part of which at least a portion is exposed to the outside of the cover part and which is electrically connected to the electrode assembly.

FIG.5

EP 4 553 972 A1

**Description**

TECHNICAL FIELD

The present invention relates to a secondary battery, a method for manufacturing the same, and a battery pack including the same.

BACKGROUND ART

In recent years, the price of energy sources increases due to the depletion of fossil fuels, the interest in environmental pollution is amplified, and the demand for eco-friendly alternative energy sources is becoming an indispensable factor for future life. Accordingly, studies on various power generation technologies such as solar power, wind power, and tidal power are continuing, and power storage devices such as batteries for more efficiently using the generated electrical energy are also of great interest.

Furthermore, as technology development and demand for electronic mobile devices and electric vehicles using batteries increase, the demands for batteries as energy sources are rapidly increasing. Thus, many studies on batteries which are capable of meeting various demands have been conducted.

Batteries storing electrical energy may be generally classified into primary batteries and a secondary batteries. Such a primary battery is a disposable consumable battery. On the other hand, such a secondary battery is a chargeable battery that is manufactured by using a material in which oxidation and reduction processes between current and the material are capable of being repeated. That is, when the reduction reaction to the material is performed by the current, power is charged. When the oxidation reaction to the material is performed by the current, power is discharged. Such charging-discharging are repeatedly performed to generate electricity.

Secondary batteries may be classified into cylindrical cells, pouch cells, and prismatic cells according to their shape. Among them, such a pouch cell may be manufactured by accommodating an electrode assembly in the form of a stack of a positive electrode, a negative electrode, a separator, etc. inside a pouch and then sealing an outer portion of the pouch.

Secondary batteries may be classified into cylindrical cells, pouch cells, and prismatic cells according to their shape. Among them, such a pouch cell may be manufactured by accommodating an electrode assembly in the form of a stack of a positive electrode, a negative electrode, a separator, etc. inside a pouch and then sealing an outer portion of the pouch.

The pouch cell according to the related art may have a limitation of cracks occurring in a pouch film in a process of molding the pouch film, and may pouch films are discarded after a degassing process. In addition, a moldable depth is limited depending on material characteristics of the pouch film, and thus there is a limit to increase in battery capacity. Furthermore, since the existing pouch cell is configured by cup-molding upper and lower cases with a pouch film and sealing outer portions of the two cases together, there are limitations in controlling or predicting a venting direction of the cell in a situation in which an internal pressure of the cell increases, or an explosion occurs due to abnormal behavior of the cell.

Thus, there is a need for a secondary battery having a shape that is capable of increasing in battery capacity while having relatively few resistance on shape, and furthermore, there is a need for a secondary battery, in which a gas emission direction is controlled when gas ejection and flame generation occur inside the cell.

DISCLOSURE OF THE INVENTION

TECHNICAL PROBLEM

An object of the present invention is to provide a secondary battery in which battery capacity is improved while having relatively few restriction in shape, an amount of moisture introduced from the outside is reduced, and structural stability is improved.

An object of the present invention is to provide a secondary battery having improved safety by controlling a direction in which a gas or flame generated inside the secondary battery is ejected.

TECHNICAL SOLUTION

At least some of the problems known from the prior art is solved by the present invention, which is defined by the subject matter of the appended independent claims. Particular examples are given by the features of the appended dependent claims.

A secondary battery may comprise at least one, some or all of: an electrode assembly, an exterior film and a cap.

The electrode assembly may have two end faces. The electrode assembly may extend in an extension direction between the two end faces. The exterior film may be configured to surround a portion of the electrode assembly so as to form at least one opening. The cap may be configured to close and/or seal the at least one opening.

The cap may comprises at least one, some or all of: a cover part, a connection part and a terminal part. The cover part may be configured to cover one of the two end faces of the electrode assembly. The connection part may be provided between the cover part and the exterior film and is configured to be coupled to the exterior film. The terminal part may be electrically connected to the electrode assembly and may extend outside of the cover part and/or the connection part.

The subject matter as claimed may provide a structure for accommodating an electrode assembly, the structure combining a (flexible) exterior film for surrounding a part of the electrode assembly and one or more rigid caps to cover the remaining part of the electrode assembly. In this manner, the secondary battery may benefit from the structural stability (e.g. in terms of rigidity, durability against external stress and/or resilience against heat and flame) provided by the one or two caps, as well as from the reduced weight and space requirement provided by the exterior film surrounding the electrode assembly.

In addition, the cap may be configured to withstand pressure and heat to a higher degree than the exterior film. Hence, in case of an ignition within the secondary battery, the subject matter as claimed may allow for heat and flame to be discharged through the exterior film rather than through the cap. Accordingly, the subject matter as claimed may allow for designing a path for the thermal and material propagation in case of emergency.

Moreover, the subject matter as claimed may provide a secondary battery with structural integrity to withstand pressure fluctuations, sudden internal pressure increases and external stress. The structural integrity may be provided by a applying a proper resin for bonding the connection part, particularly the resin layer or the coupling portion thereof, to the exterior film.

The technical effects and benefits of the subject matter as claimed are not limited thereto, and may alternatively or additionally include any of the technical effects and benefits as mentioned below.

In particular, the cap may be configured to close one or more openings formed by the exterior film. The exterior film may be made of a material that is sufficiently flexible for surrounding the electrode assembly. The exterior film may be provided as a rectangular laminate (or single material) sheet and may surround the electrode assembly substantially around (without limitation to a circular surrounding) an axis that is parallel to the extension direction of the electrode assembly, thereby forming two openings respectively over two opposite end faces of the electrode assembly.

Herein, the term secondary battery may refer to an electrochemical energy storage device that can be discharged and recharged multiple times. For example, the secondary battery may be capable of undergoing multiple charge-discharge cycles due to reversible electrochemical reactions. The secondary battery may also be referred to as a rechargeable battery. For example, the secondary battery may be or include a lithium-ion battery, nickel-metal hydride (NiMH) battery, nickel-cadmium (NiCd) battery or a lead-acid battery in line with the common understanding in the field of battery designing and manufacturing. However, it is understood that the technical features and their effects disclosed herein are not limited to a secondary battery only but may as well be applicable also to a primary battery. Accordingly, the present disclosure may generally refer to a chemical storage device including the features as disclosed herein and/or included in the appended claims.

Herein, the term electrode assembly may refer to an arrangement of one or more positive electrodes (which may also be referred to as cathodes) and one or more negative electrodes (which may also be referred to as anodes). The electrode assembly may further comprise one or more separators interposed between neighboring positive electrode and negative electrode to prevent direct contact. The electrode assembly may be provided as a stack of electrodes and one or more separators stacked upon one another. The electrode assembly may comprise a plurality of electrodes and one or more separators stacked on one another in a stacking direction.

In a specific example, the electrode assembly may comprise a plurality of positive electrodes, a plurality of negative electrodes and one or more separators stacked upon one another in a specific order. In a further specific example, the electrode assembly may comprise a plurality of positive electrodes and a plurality of negative electrodes provided separately on a continuous separator film and stacked upon one another by folding the separator film repeatedly. In another specific example, the electrode assembly may comprise one or more positive electrodes, one or more negative electrodes and one or more separators stacked upon one another in a specific order and wound together around a winding direction to a roll-like structure with a substantially circular or flat cross-section perpendicular to the winding direction. The electrode assembly may further include any, some or all of the additional features as detailed below with respect to the particular embodiments.

In the secondary battery, the exterior film and the cap together accommodate and enclose the electrode assembly, and preferably an electrolyte. The cap and the exterior film may be coupled to each other so as to provide a fluid-tightly sealed housing for the electrode assembly. The connection part of the cap may provide a physical connection with, or may be physically connected to, the exterior film, particularly in a fluid-tight manner. Herein, the expression coupling may indicate providing a physical bonding between two components, e.g., between the connection part (and/or the coupling portion thereof) and the cover part, and between the connection part (and/or the coupling portion thereof) and the exterior film (particularly an inner surface thereof), unless indicated otherwise or technically inappropriate. The coupling may be directly, i.e., without any other components between the two components coupled to each other, or indirectly, i.e., with at least one further component being provided between the two components coupled to each other, unless indicated otherwise or technically inappropriate.

The electrode assembly may have two end faces and extend in an extension direction between the two end faces. The two end faces may correspond to two opposite side surfaces that each extend parallel to a stacking direction of a stack of electrodes and separator(s) of the electrode assembly. The two end faces may be opposite to each other with respect to the extension direction of the electrode assembly. For example, the electrode assembly may be arranged and/or elongated along the extension direction. The extension direction may be perpendicular to the stacking direction. The exterior film may surround the electrode assembly around the extension direction.

In case of the electrode assembly being or comprising a stack of electrodes and separator(s), the electrode assembly may further comprise four more end faces arranged perpendicular to said two end faces, and these four end faces may be entirely or at least partially covered by the exterior film surrounding the electrode assembly. In other examples, a lateral surface perpendicular to the two end faces of the electrode assembly may be entirely or at least partially covered by the exterior film.

The exterior film may be configured to surround a portion of the electrode assembly so as to form at least one opening, i.e., one or more openings. In particular, the exterior film may (be configured to) wrap around the portion of the electrode assembly so as to form said at least one opening. The portion of the electrode assembly may refer to the other end faces or the lateral surface as mentioned above. In particular, the exterior film may be configured to surround (wrap around) the electrode assembly so as to form at least one opening respectively exposing the two end faces of the electrode assembly. One opening may expose one of the two end faces of the electrode assembly. Two openings may respectively expose the two end faces of the electrode assembly. In other examples, the exterior film may surround the electrode assembly to cover the electrode assembly completely except for one single opening. The cap may be configured to cover and/or seal this single opening.

Herein, the term surround or surrounding may be used to express that the exterior film extends around the portion of the electrode assembly. In particular, the term surrounding may be or include the exterior film wrapping (or being wrapped) around the portion of the electrode assembly. By surrounding, the exterior film may extend completely around the portion of the electrode assembly. In specific examples, the exterior film may be provided such that a surplus of the exterior film remains after surrounding the portion of the electrode assembly. The surplus of the exterior film may be folded flat and/or wound together to reduce a volume occupied thereby. Furthermore, the surplus of the exterior film may be attached to a main body of the exterior film surrounding the portion of the electrode assembly, for example by means of an adhesive and/or a tape.

By surrounding the portion of the electrode assembly, the exterior film may form one, two or more openings. For example, the exterior film may be provided as a polygonal sheet, and deforming the exterior film to surround the portion of the electrode assembly may result in forming one, two or more openings. For example, the one, two or more openings may be formed so as to expose the end faces of the electrode assembly.

In specific examples, the exterior film may be provided as a rectangular laminate (or single material) sheet and may surround the electrode assembly substantially around (without limitation to a circular surrounding) an axis that is parallel to the extension direction of the electrode assembly, thereby forming two openings. The two openings may be respectively formed over two end faces of the electrode assembly that are arranged opposite to each other in terms of the extension direction. The two openings may be formed so as to respectively expose the two end faces of the electrode assembly.

The exterior film may be made of a material that is sufficiently flexible for surrounding the electrode assembly. In particular, the exterior film may be provided as a single material sheet or a laminate sheet that is configured to be deformed such to surround, particularly wrap around, the portion of the electrode assembly. In particular, the exterior film may surround the portion of the electrode assembly by wrapping around (or being wrapped around) the electrode assembly around the extension direction. In this manner, the exterior film may form one or more opening, particularly two openings, through which respective end faces of the electrode assembly may be exposed. The formation of the openings by the exterior film exposing the respective end faces of the electrode assembly may be due to the shape of the electrode assembly as detailed herein.

The exterior film may be made of, or include, a material (mixture) that is configured to provide an enclosure for the electrode assembly with sufficient sealing and insulation properties. Furthermore, the exterior film may be made of, or include, a material (mixture) that is deformable so as to wrap around the portion of the electrode assembly. The exterior film may be made in the manner as detailed below. The exterior film may include one or more materials as detailed below. The exterior film may further include any, some or all of the additional features as detailed below with respect to the particular embodiments.

The cap may be configured to close and/or seal the at least one opening. In a specific example, the secondary battery may comprise two caps each configured to close and/or seal a respective one of two openings formed by the exterior film. The two caps may be provided identically, or in a manner corresponding to each other. Accordingly, the secondary battery may further comprise a second cap that includes any, some or all of the features of the cap as described herein.

For example, the cap may be configured to close the at least one opening by being positioned over or into said opening. The closing of the at least one opening by the cap may result in preventing a passage of battery components and substances therethrough. In particular, the closing of the at least one opening by the cap may result in preventing a discharge of the electrode assembly, electrolyte, any byproduct from operation of the secondary battery or parts of the electrode assembly, and preventing entry of any impurity through said opening. Accordingly, the cap may cover the opening physically. The closing by the cap may also be referred to as obstruction or capping.

Alternatively or additionally, the cap may be configured to seal the at least one opening by providing a barrier that prevents the exchange of gases, liquids, or other materials through said opening. The cap may be configured to form a tighter fit with the edges of said opening. The cap may further include of a gasket, an adhesive or compression for a fluid-tight sealing.

The cap may be provided as a single piece or as an assembly of multiple pieces that are separately provided. For example, the cap may comprise at least one of: the cover part, the connection part and the terminal part each as disclosed herein. The cap may be shaped and/or dimensioned so as to correspond to the at least one opening formed by the exterior film. The cap may be shaped and/or dimensioned so as to correspond to one of the two end faces of the electrode assembly.

The cap may be provided so as to be water-impermeable and seal the at least one opening in a fluid-tight manner. For example, a peripheral part of the cap, which may correspond to the connection part as disclosed herein, may be made of a material and/or provided with an adhesive so as to provide a fluid-tight sealing with an inner surface of the exterior film. For example, a peripheral part of the cap, which may correspond to the connection part as disclosed herein, may be made of, or include, a polymer. Alternatively or additionally, the cap may be made of, or provided with, a material in a central part, which may correspond to the connection part as disclosed herein, that is impermeable for liquid, particularly water. For example, a central part of the cap, which may correspond to the cover part as disclosed herein, may be made of, or include, a metal. The cap may further include any, some or all of the additional features as detailed below with respect to the particular embodiments.

Additionally or alternatively, the cap may comprise a terminal part provided so as to provide an electrical connection to the electrode assembly from outside of the cap and the exterior film. The terminal part may further include any, some or all of the additional features as detailed below with respect to the particular embodiments.

The cap may comprise a cover part. The cover part may be implemented as disclosed herein. The cover part may be configured to cover one of the two end faces of the electrode assembly. The cover part may be configured to be impermeable to fluids, and particularly impermeable to water. The cover part may be made of, or include, a metal. In a specific example, the cover part may comprise a metal sheet arranged substantially parallel to one of the end faces of the electrode assembly. In addition, the cover part may comprise one or more parts extending from the metal sheet, particularly from one or more edges thereof, toward the electrode assembly. Additionally or alternatively, the cover part may further include any, some or all of the additional features as detailed below with respect to the particular embodiments.

Additionally or alternatively, the cap may comprise a connection part. The connection part may be implemented as disclosed herein. The connection part may be provided between the cover part and the exterior film. The connection part may be configured to be coupled to the exterior film. The connection part may be made of, or include, a material that is suitable for adhesion to the exterior film, particularly to an inner surface thereof. In particular, the connection part may include one or more adhesive materials to facilitate the physical coupling between the connection part and (the inner surface of) the exterior film. The connection part may further include any, some or all of the additional features as detailed below with respect to the particular embodiments.

In specific examples, the cover part and the connection part may be configured so that the cover part may engage with the connection part, and/or vice versa, in a form-fitting manner and/or by means of a frictional connection. In a specific example, the connection part may comprise a groove and/or a recess shaped and dimensioned so as to receive the cover part. Additionally or alternatively, the connection part may have an opening in which the cover part may be fitted a form-fitting manner and/or fixed by means of a frictional connection. Additionally or alternatively, the connection part may be configured to completely enclose the cover part. Here, the connection part may be provided as a single piece component or as an assembly comprising multiple separate components. The cover part and/or the connection part may be further configured in a manner as described in detail below.

On a side of the cap facing away from the electrode assembly, the cover part may entirely or at least partly cover the connection part. Alternatively, the connection part may cover the cover part on a side of the cap facing away from the electrode assembly. For example, the cover part may be partly or completely embedded in the connection part.

Additionally or alternatively, the cap may comprise a terminal part. The terminal part may be electrically connected to the electrode assembly. The terminal part may extend outside of the cover part and/or the connection part. The terminal part may extend through the cover part and/or the connection part. The terminal part may be made of, or include, an electrically conductive material. In particular, the terminal part may be made of, or include, a metal. The terminal part may be provided as a monolithic component, i.e., as a single piece made of the same material. Alternatively, the terminal part may be provided as an assembly of multiple parts. The connection part may further include any, some or all of the additional features as detailed below with respect to the particular embodiments.

According to an additional example, a secondary battery may include: an electrode assembly extending in one direction, which may correspond to an extension direction; an exterior film configured to surround a portion of the electrode assembly; and a cap configured to surround a remaining portion of the electrode assembly, wherein the cap includes: a cover part configured to cover one side in an extension direction of the electrode assembly; a connection part including a coupling portion which is provided on an outer surface of the cover part and is coupled to the exterior film; and a terminal part of which at least a portion is exposed to the outside of the cover part and which is electrically connected to the electrode assembly.

In some examples, the terminal part may extend through the connection part and/or the cover part in the extension direction. The terminal part may have a cross-sectional area that is constant within the connection part and/or the cover part. Here, the cross-sectional area may be determined perpendicular to the extension direction.

For example, the terminal part may extend linearly through the connection part and/or the cover part. For example, the terminal part may have a cylindrical shape or a beam-like shape with a polygonal cross-section perpendicular to the extension direction inside the connection part and/or the cover part. Additionally and optionally, the terminal part may have one or two end parts respectively formed on its ends outside of the connection part and/or the cover part. The one or two end parts may have an enlarged cross-sectional area, in particular greater than a cross-sectional area of a through-hole through the connection part and/or the cover part, so as to arrest the terminal part in position.

In a specific example, the terminal part may be provided as a pin having a single end part with an enlarged cross-sectional area. The pin may have a length larger than a length of a through-hole formed through the connection part and/or the cover part, and may be passed through the through-hole with the single end part resting on a surface of the connection part and/or the cover part. The other end extending out of the through-hole may be deformed to have an enlarged cross-sectional area so as to rest on another surface of the connection part and/or the cover part. In this manner, the terminal part may be arrested in the position and prevented from moving toward and/or away from the electrode assembly. In specific examples, the terminal part may be considered as a rivet terminal.

In some examples, the terminal part may terminate at a flat surface that is proximal to the electrode assembly and faces the electrode assembly. The flat surface of the terminal part may be circular, elliptical or polygonal when viewed in the extension direction. The flat surface of the terminal part may be arranged substantially perpendicular to the extension direction. The flat surface of the terminal part may be configured to provide a surface for physically and/or electrically connecting the electrode assembly, or its electrode tabs or electrode leads protruding therefrom, to the terminal part.

In some examples, the terminal part may extend through the connection part and/or the cover part in the extension direction. The terminal part may comprise a body part and/or an outer part. The body part may be disposed within a through-hole through the connection part and/or the cover part. In such example, the outer part may extend from the body part to the outside of the connection part and/or the cover part. A cross-sectional area of the outer part may be greater than that of the through-hole so that movement of the terminal part in the extension direction toward the electrode assembly is restricted.

In particular, the body part may be configured to fit into the through-hole through the connection part and/or the cover part. The terminal part may be arrested in place by the cross-sectional area of the outer part of the terminal part being greater than the through-hole through the connection part and/or the cover part. The outer part of the terminal part may correspond to any of the end parts of the terminal part as described above. The body part may further include any, some or all of the additional features as detailed below with respect to the particular embodiments. The outer part may further include any, some or all of the additional features as detailed below with respect to the particular embodiments.

In some examples, the terminal part may further comprise an inner part. The inner part may extend from the body part toward the electrode assembly. The inner part may be provided and/or deformed so as to have a cross-sectional area greater than the through-hole. The inner part of the terminal part may correspond to any of the end parts of the terminal part as described above. In particular, the inner part and the outer part as mentioned above may respectively correspond to the two end parts at both ends of the body part as described above. Accordingly, the outer part and the inner part of the terminal part may contribute to arresting the terminal part in place by having greater cross-sectional areas than the through-hole through the cover part and/or the connection part. The inner part may further include any, some or all of the additional features as detailed below with respect to the particular embodiments.

In some examples, the secondary battery may further comprise a busbar. The busbar may be configured to electrically and/or physically connect between the terminal part and the electrode assembly. In other words, the busbar may be configured to provide an electrical and/or physical connection between the terminal part and the electrode assembly. The busbar may be made of an electrically conductive material, for example a metal. The busbar may be provided in a sheet form and be deformed so as to provide an electrical and/or physical connection between the terminal part and the electrode assembly. The busbar may engage with the terminal part, in particular with the inner part of the terminal part, for example by being hooked on the same. The busbar may further include any, some or all of the additional features as detailed below with respect to the particular embodiments.

In some examples, the busbar may engage with the terminal part so as to at least partly extend between the terminal part and the cover part and/or the connection part. For example, the busbar may have a hole or a recess to engage with, or hook onto, the terminal part, particularly the inner part thereof. In particular, the busbar may be shaped and dimensioned so to engage with the terminal part and be partially positioned between an enlarged end part of the terminal part and the cover part and/or the connection part, particularly a respective surface (inwardly) facing the electrode assembly.

In some examples, the terminal part extends through the busbar. For example, the terminal part, particularly the inner part thereof, may extend through a hole or a recess formed through or in the busbar. The engagement of the terminal part with the busbar may be further implemented as detailed below with respect to the embodiments.

In some examples, the busbar may comprise a first busbar part and a second busbar part. The first busbar part may be in physical contact with the terminal part. The second busbar part may extend from the first busbar part toward the electrode assembly. For example, the first busbar part may be or comprise a metal sheet in contract, or engaging, with the terminal part, particularly with the inner part of the terminal part. The first busbar part may be arranged substantially parallel to an inner surface of the cover part and/or the connection part facing the electrode assembly. The first busbar part may be arranged substantially perpendicular to the extension direction of the electrode assembly. The second busbar part may be made of the same material as the first busbar part and extend in a direction that is not parallel to the first busbar part. The first busbar part and the second busbar part may be provided as a single piece or may be provided as separate pieces joint together.

Herein, the first busbar part and the second busbar part may be also referred to as the first metal part and the second metal part, respectively. But these denominations are not intended to limit the first and second busbar parts to be metal parts.

In some examples, the busbar may extend toward the electrode assembly in a folded manner. In particular, the busbar may be provided in shape of being folded multiple times. In a specific example, the busbar may be provided as a metal sheet folded multiple times, wherein a section between two subsequent folds may be referred to as a metal part, with the first metal part corresponding to a part of the busbar that is in (physical) contact with the terminal part. For example, the busbar may be folded three times on each side with respect to the terminal part, resulting in four metal parts on each side of the busbar. In particular, each of the metal parts may be formed by being bent by 60 to 120 degrees, or by 80 to 100 degrees, or around 90 degrees, with respect to the respectively previous metal part. The metal parts may have a same dimension or similar dimensions measured in-plane, or differently dimensioned in terms of the distance from the terminal part. Accordingly, the metal parts of the busbar may each extend toward the electrode assembly to different extents.

In some examples, the electrode assembly comprises a plurality of electrode tabs each physically and/or electrically coupled to the busbar. An electrode tab as used herein may refer to an electrically conductive component attached to one or more electrodes of the electrode assembly. The electrode tab may be configured to provide an electric current path for between the electrode assembly and the terminal part (and/or the busbar, if applicable).

The electrode tab may be made of an electrically conductive material, including a metal, such as aluminum or copper. The electrode tab may be provided as a strip or a sheet elongated between the terminal part and the electrode assembly. The electrode tab may be welded or otherwise attached to electrode leads protruding from electrodes of the electrode assembly.

In some examples, the cover part may have an outer circumferential surface extending along a circumference of the electrode assembly around the extension direction. The connection part may comprise a coupling portion configured to be coupled to the exterior film. The coupling portion may be provided on the outer circumferential surface of the cover part.

The outer circumferential surface of the cover part may be shaped and dimensioned to correspond (or fit) to the size and shape of the electrode assembly, particularly one of the end faces when viewed perpendicular thereto (e.g., in the extension direction). Additionally or alternatively, the outer circumferential surface of the cover part may be shaped and dimensioned so as to fit into the at least one opening formed by the exterior film. The outer circumferential surface of the cover part may be arranged with a gap between to the electrode assembly in the extension direction. In a specific example, the outer circumferential surface may have a polygonal annular shape, for example a rectangular annular shape (whereby the corners may be rounded due to manufacturing limitations). In particular, the outer circumferential surface may have a rectangular annular shape when viewed in the extension direction. The outer circumferential surface of the cover part may further include any, some or all of the additional features as detailed below with respect to the particular embodiments.

The coupling portion may be or include an adhesive, or a multilayer of different adhesives, to provide adhesion between the connection part and the exterior film in a fluid-tight sealing manner. The coupling portion may also include one or more layers (substrates) on which a respective adhesive is provided. The coupling portion may be provided on the circumferential surface of the cover part facing the exterior film, in particular an inner surface of the exterior film. The coupling portion may further include any, some or all of the additional features as detailed below with respect to the particular embodiments.

In some examples, the coupling portion may have a polygonal annular shape, a rectangular annular shape, an elliptical annular shape, a circular annular shape, a ring shape or a combination thereof. Additionally or alternatively, the outer circumferential surface of the cover part may have a shape corresponding to the shape of the coupling portion, i.e., a polygonal annular shape, a rectangular annular shape, an elliptical annular shape, a circular annular shape, a ring shape or a combination thereof. The shaped may refer to a viewing angle parallel to the extension direction or perpendicular to a plane enclosed by the coupling portion and/or the outer circumferential surface of the cover part. Furthermore, the shape and/or size of the coupling portion and/or the outer circumferential surface of the cover part may correspond to a shape of the electrode assembly when viewed in said direction.

In some examples, the cover part may comprise a cover portion having an outward surface that faces away from the electrode assembly. Additionally, the cover part may comprise an extension portion extending from the cover portion toward the electrode assembly. The connection part may extend on an outer surface of the extension portion.

Accordingly, the outward surface of the cover portion of the cover part may be an outermost surface of the cap. Herein, the terms cover part and cover portion are used, which should not be confused with one another. Cover portion as used herein indicates a part of the cover part that forms the outward surface on a side opposite to one facing the electrode assembly. Optionally, however, the connection part may comprise another layer that is formed on top of the outward surface of (the cover portion of) the cover part. The cover portion may be made of a material that is impermeable to fluids, including particularly water. The cover portion may be or include a metal plate or a metal sheet. The cover portion may be arranged perpendicular to the extension direction of the electrode assembly. The cover portion may further include any, some or all of the additional features as detailed below with respect to the particular embodiments.

The extension portion of the cover part may be formed integrally with the cover portion. Alternatively or additionally, the cover portion and the extension portion may be provided as separate pieces and joint by means of welding or any other proper means. The extension portion may extend from an edge of the cover portion. In a specific example, the extension portion extends from the entire edge of the cover portion. The extension portion may further include any, some or all of the additional features as detailed below with respect to the particular embodiments.

As described herein, the cover part may engage with the connection part. Alternatively or additionally, the cover part may be, at least partly, embedded in the connection part. In such examples, the connection part may be provided so as to support and/or accommodate at least part of the extension portion. Accordingly, the connection part, and particularly the coupling portion of the connection part as described herein, may extend on the outer surface of the extension portion, particularly so as to prevent a physical contact between the extension portion and the exterior film. Alternatively or additionally, the connection part may extend on an inner surface of the extension portion, particularly so as to prevent a physical contact between the extension portion and the electrode assembly. Alternatively or additionally, the connection part may extend over a tip of the extension portion, particularly so as to prevent a physical contact between the extension portion and the electrode assembly.

In some examples, the extension portion comprises a first extension portion and a second extension portion. The first and second extension portions may be provided at a predetermined distance from each other. The first and second extension portions may extend parallel to each other toward the electrode assembly.

In some examples, the extension portion may further comprise a third extension portion and a fourth extension portion. The third extension portion may extend between the first extension portion and the second extension portion. The fourth extension portion may extend between the first extension portion and the second extension portion, and provided at a predetermined distance from the third extension portion. The third and fourth extension portions may extend in parallel toward the electrode assembly.

The extension portion may comprise two, three, four or more extension portions each extending toward the electrode assembly. The extension portions may be provided integrally with the cover portion. Alternatively, at least one of the extension portions may be provided separately from the cover portion and attached to the cover portion. The extension portions may be each made of a material that is impermeable to fluids, including particularly water. The extension portions may be made of the same material as the cover portion.

In examples where the cover portion of the cover part has a rectangular shape with four straight edges, two or four extension portions may each extend from a respective edge of the cover portion toward the electrode assembly. The two extension portions, i.e., the first and second extension portions, may be arranged on opposite edges of the cover portion in a manner distanced from each other. The two further extension portions, i.e., the third and fourth extension portions, may be arranged on the other two edges that are opposite to each other so that they are spaced from each other.

The extension portions may have a same length, e.g. measured from the cover portion toward the electrode assembly, or may extend toward the electrode assembly with different lengths. The extension portions may be dimensioned and shaped so as to not physically reach the electrode assembly. The extension portions may further include any, some or all of the additional features as detailed below with respect to the particular embodiments.

In some examples, the first to fourth extension portions may be connected to each other to form a rectangular annular shape when viewed in a direction parallel to the extension direction. In alternative examples, the extension portions may form an open figure when viewed in a direction parallel to the extension direction. In further examples, at least one of the extension portions may be curved when viewed in a direction parallel to the extension direction. Generally, the extension portions may form a polygonal, rounded and/or elliptical annular shape when viewed in a direction parallel to the extension direction.

In some examples, the cover portion may have a plate shape. The extension portion may extend from an edge of the cover portion. In particular, the cover portion may be provided as a rectangular metal plate, and the extension portions may extend from each of the four straight edges of the cover portion.

In some examples, in the extension direction away from the electrode assembly, the cover part may extend as far as the connection part, or farther away than the connection part. Accordingly, the cover part may provide an outermost surface of the cap.

In some examples, the connection part may comprise an outer portion configured to at least partly cover an outward surface (of the cover portion) of the cover part. Accordingly, the extension part may provide an outermost surface of the cap. The extension part may be made of, or comprise, an electrically insulating material. The extension part covering the outward surface of the cover part may provide an insulation on the corresponding side of the cap except for the terminal part that is arranged through the cover part and/or the connection part.

In some examples, the cover part, or its cover portion, may comprise an inward surface that is opposite to the outward surface and faces the electrode assembly. The connection part may comprise an inner portion configured to cover the inward surface. The connection part may be made of, or comprise, an electrically insulating material. Accordingly, the connection part may provide for electrical insulation between the inward surface of the cover part and the electrode assembly.

In some examples, the cover part, particularly the extension portion of the cover part, may be at least partly embedded in the connection part. More generally, the cover part may be, at least partly, embedded in the connection part. The connection part may be provided so as to support and/or accommodate at least part of the cover part, and particularly the extension portion of the cover part.

Alternatively or additionally, the cover part may be inserted into an opening formed in the connection part. The connection part may additionally or alternatively comprise one or more grooves, one or more recesses and/or one or more holes into which the cover part, particularly its extension portion, is (at least partly) inserted, and/or with which the cover part, particularly its extension portion, engages.

In some examples, the connection part may comprise an extension portion-side portion extending along an inner surface of the extension portion. The extension portion-side portion may be configured so as to support the extension portion and electrically insulate the extension portion of the cover part from the electrode assembly. The extension portion-side portion may further include any, some or all of the additional features as detailed below with respect to the particular embodiments.

Additionally or alternatively, the connection part may comprise an end-side portion covering an end of the extension portion facing the electrode assembly. The end-side portion may be configured so as to support the extension portion at its tip and electrically insulate the same from the electrode assembly. The end-side portion may further include any, some or all of the additional features as detailed below with respect to the particular embodiments.

In some examples, the exterior film may be made of an elastic material or elastic laminate configured to wrap around the electrode assembly. The material and the elastic properties of the exterior film may be as detailed below.

In some examples, the cover part may be at least partly embedded in the connection part, by being inserted into a recessed portion and/or an opening formed in the connection part.

In some examples, the secondary battery may further comprise an insulation member disposed between the cover part and the electrode assembly. The insulation member may provide for an electrical insulation between the cover part and the electrode assembly. Alternatively or additionally, the connection part may be made of an electrically insulating material and may extend continuously between the cover part and the electrode assembly.

Here, the terminal part may extend from the inside of the connection part to the outside of the connection part and have a certain cross-sectional area in a longitudinal direction.

Here, the electrode assembly may include a plurality of electrodes and separators, which are stacked, and a portion of the terminal part, which is exposed to the inside of the connection part, may have a plane that is parallel or perpendicular to the stacking direction of the electrodes and the separators.

Here, the terminal part may include: a body part disposed to pass through the connection part and the cover part; and an outer part exposed to the outside of the connection part, wherein a cross-sectional area of the outer part may be greater than that of the body part so that movement of the outer part toward the electrode assembly is restricted by the cover part.

Here, the terminal part may include: a body part disposed to pass through the connection part and the cover part; and an inner part exposed to the inside of the connection part and having a cross-sectional area greater than that of the body part.

Here, the secondary battery may further include a busbar disposed between the inner part and the electrode assembly to connect one end of the inner part to the electrode assembly.

Here, the busbar may be disposed to be hooked on the inner part so that movement toward the electrode assembly is restricted by the inner part.

Here, the terminal part may be disposed to pass through the busbar.

Here, the busbar may include: a first metal part that is in contact with the inner part; and a second metal part extending from the first metal part toward the electrode assembly.

Here, the busbar may include: a first metal part that is in contact with the inner part; a second metal part extending from the first metal part toward the electrode assembly; a third metal part extending from the second metal part toward the exterior film; and a fourth metal part which extends from the third metal part toward the electrode assembly and of which one end is connected to the electrode assembly.

Here, the electrode assembly may include a plurality of electrode tabs, each of the second metal part, the third metal part, and the fourth metal part may be provided in a pair, and a portion and a remaining portion of the plurality of electrode tabs may be connected to the pair of fourth metal parts, respectively.

Here, an outer circumferential surface of the cover part may extend in a circumferential direction of the electrode assembly, and the coupling portion may be provided on the outer circumferential surface of the cover part.

Here, the coupling portion may have a ring shape.

Here, the cover part may include: a cover portion provided with an outward surface that faces the outside of the electrode assembly; and an extension portion extending from the cover portion toward the electrode assembly, wherein the coupling portion is provided on an outer surface of the extension portion.

Here, the extension portion may include: a first extension portion; and a second extension portion extending parallely at a predetermined distance from the first extension portion.

Here, the extension portion may include: a third extension portion provided between the first extension portion and the second extension portion; and a fourth extension portion extending parallely at a predetermined distance from the third extension portion.

Here, the first to fourth extension portions may be connected to each other to have a ring shape.

Here, the cover portion may have a plate shape, and the extension portion may extend from an edge of the cover portion.

Here, the cover portion may be disposed on the same surface as one surface of the coupling portion or disposed further outside than the one surface of the coupling portion.

Here, the connection part may include an outer portion configured to cover the outward surface.

Here, the cover portion may include an inward surface that is opposite to the outward surface and faces the electrode assembly, and the connection part may include an inner portion configured to cover the inward surface.

Here, the connection part may include an extension portion-side portion provided on an inner surface that is opposite to the outer surface of the extension portion.

Here, the connection part may include an end-side portion provided at a side of an end of the extension portion to connect the extension portion-side portion to the coupling portion, wherein the extension portion may be embedded in the connection part.

Here, the exterior film may have flexibility to be bendable.

The subject matter as claimed may further provide a method for manufacturing a secondary battery. The method may comprise providing an electrode assembly having two end faces and extending in an extension direction between the two end faces; wrapping around a portion of the electrode assembly using an exterior film so as to form an opening; and closing and/or sealing the opening formed by the exterior film using a cap. The cap may comprise a cover part, a connection part and a terminal part, which may be each provided as disclosed herein. The method may further include any, some or all of the additional features and method steps as detailed below with respect to the particular embodiments.

In particular, the cover part may be configured to cover one of the two end faces of the electrode assembly. The connection part may be provided between the cover part and the exterior film and is configured to be coupled to the exterior film. The terminal part may be electrically connected to the electrode assembly and extend on an outside of the cover part and/or the connection part.

According to another aspect, a method for manufacturing a secondary battery may include: providing an electrode assembly including a positive electrode and a negative electrode and extending in one direction, which may correspond to the extension direction; allowing an exterior film to surround a portion of the electrode assembly; and allowing a cap to cover a remaining portion of the electrode assembly, wherein the cap includes: a cover part configured to cover one side in an extension direction of the electrode assembly; a connection part including a coupling portion which is provided on an outer surface of the cover part and is coupled to the exterior film; and a terminal part of which at least a portion is exposed to the outside of the cover part and which is electrically connected to the electrode assembly. The method may further include any, some or all of the additional features and method steps as detailed below with respect to the particular embodiments.

The subject matter as claimed may further provide a battery pack that comprises a secondary battery as disclosed herein, and a packaging configured to accommodate the secondary battery. The battery pack may further include any, some or all of the additional features as detailed below with respect to the particular embodiments.

According to further another aspect, a battery pack may include: a secondary battery; and a packaging configured to accommodate the secondary battery, wherein the secondary battery includes: an electrode assembly extending in one direction, which may correspond to the extension direction; an exterior film configured to surround a portion of the electrode assembly; and a cap configured to surround a remaining portion of the electrode assembly, wherein the cap includes: a cover part configured to cover one side in an extension direction of the electrode assembly; a connection part including a coupling portion which is provided on an outer surface of the cover part and is coupled to the exterior film; and a terminal part of which at least a portion is exposed to the outside of the cover part and which is electrically connected to the electrode assembly. The battery pack may further include any, some or all of the additional features as detailed below with respect to the particular embodiments.

ADVANTAGEOUS EFFECTS

In the secondary battery according to the embodiment of the present invention, since there is no process of molding the exterior film, there may be few restriction on the form in which the exterior film accommodates the electrode assembly, and the possibility of the detects such as the cracks in the exterior film may be reduced to improve the battery capacity.

In addition, the degree of permeation of moisture from the outside of the secondary battery into the secondary battery may be reduced to improve the safety of the secondary battery.

In addition, since the sealing strength is excellent, it may withstand the high level of the internal pressure due to the gas generated inside the secondary battery to improve durability of the secondary battery.

In addition, the terminal part and the busbar may be electrically connected to the electrode assembly in the various forms.

In addition, the structural stability of the secondary battery may be improved by the coupling relationship and the arrangement form of the connection part and the cover part, and the problem in which of venting to the cap portion in the event of the explosive increase in internal pressure or flame eruption.

In addition, the secondary battery may be efficiently electrically connected to the outside through the terminal part passing through the connection part.

In addition, the outer portion of the connection part may protect the cover portion of the cover part from the external contamination or impact.

In addition, the outer portion and the coupling portion may be connected to improve the coupling between the coupling portion and the cover part.

In addition, since the cover part is covered by the outer portion, the insulation between the cover part and other components may be improved, and the heat transfer may be suppressed in the thermal runaway situation.

In addition, since the cover part is entirely surrounded by the connection part, the cap may be easily manufactured by the insert injection process.

In addition, since the electrode assembly is sealed by the exterior film and the cap, in the situation in which the abnormal behavior occurs inside the secondary battery, the gas or flame emission may be induced toward the exterior film. Therefore, the stability of the secondary battery may be improved.

The effects of the prevent invention are not limited by the aforementioned description, and thus, more varied effects are involved in this specification.

BRIEF DESCRIPTION OF THE DRAWINGS

FIG. 1 is a perspective view illustrating a battery pack when viewed from the above according to an embodiment of the present invention. Here, the packaging is indicated by dotted lines, and a configuration that is seen through the packing is indicated by solid lines.

FIG. 2 is a perspective view illustrating a secondary battery when viewed from the above according to a first embodiment of the present invention.

FIG. 3 is an exploded perspective view of the secondary battery of FIG. 2.

FIG. 4 is an exploded perspective view illustrating a state in which a connection part and a cover part are coupled to each other in FIG. 3.

FIG. 5 is a partial cross-sectional view taken along line A-A' of FIG. 2.

FIG. 6 is a partial cross-sectional view taken along line B-B' of FIG. 2.

FIG. 7 is a perspective view illustrating a secondary battery when viewed from the above according to a second embodiment of the present invention.

FIG. 8 is an exploded perspective view of the secondary battery of FIG. 7.

FIG. 9 is a partial cross-sectional view taken along line C-C' of FIG. 7.

FIG. 10 is a partial cross-sectional view taken along line C-C' of FIG. 7 according to a third embodiment of the present invention.

FIG. 11 is a partial cross-sectional view of a secondary battery (a first modified example of a coupling portion), taken along line C-C' of FIG. 7 according to a fourth embodiment of the present invention.

FIG. 12 is a partial cross-sectional view of the secondary battery (a second modified example of the coupling portion), taken along line C-C' of FIG. 7 according to the fourth embodiment of the present invention.

FIG. 13 is a partial cross-sectional view of the secondary battery (a third modified example of the coupling portion), taken along line C-C' of FIG. 7 according to the fourth embodiment of the present invention.

MODE FOR CARRYING OUT THE INVENTION

Hereinafter, preferred embodiments of the present invention will be described in detail with reference to the accompanying drawings so that those of ordinary skill in the art may easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor may properly define the concept of a term to describe and explain his or her invention in the best ways.

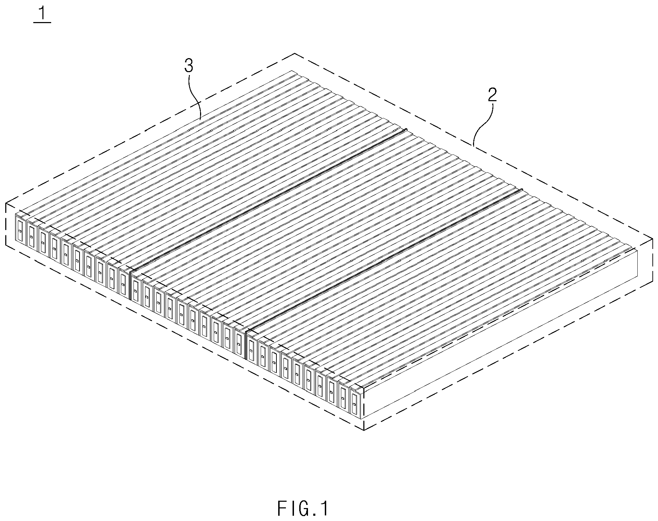

FIG. 1 is a perspective view illustrating a battery pack when viewed from the above according to an embodiment of the present invention. Here, the packaging is indicated by dotted lines, and a configuration that is seen through the packing is indicated by solid lines.

In FIG. 1, a battery pack according to an embodiment of the present invention is disclosed. Referring to FIG. 1, a battery pack 1 according to an embodiment of the present invention may be a battery pack for charging and discharging electric energy.

A battery pack 1 according to an embodiment of the present invention may include a secondary battery 3. Here, the secondary battery 3 may be provided in plurality. The battery pack 1 may include a packaging 2 that accommodates the plurality of secondary batteries 3 therein. The packaging 2 may be configured to protect the secondary battery 3 from an external impact or contamination.

In this embodiment, the packaging 2 may be provided as a box-shaped structure. The packaging 2 may be made of metal or plastic having certain rigidity. The packaging 2 may have a structure in which a plurality of plates are coupled.

However, the shape or structure of the packaging 2 may be modified as needed. For example, at least a portion of the packaging 2 may have a curved shape. In addition, the packaging 2 may additionally include other components. For example, the packaging 2 may be provided with a busbar electrically connected to the plurality of secondary batteries 3 and/or a venting component that connects the inside and outside of the packaging 2 to each other.

Hereinafter, a secondary battery according to an embodiment of the present invention is described. Generally for all examples described herein, the secondary battery may further comprise an insulation member disposed between the cover part and the electrode assembly. Alternatively or additionally, the connection part may be made of an electrically insulating material and extend continuously between the cover part and the electrode assembly.

Embodiment 1

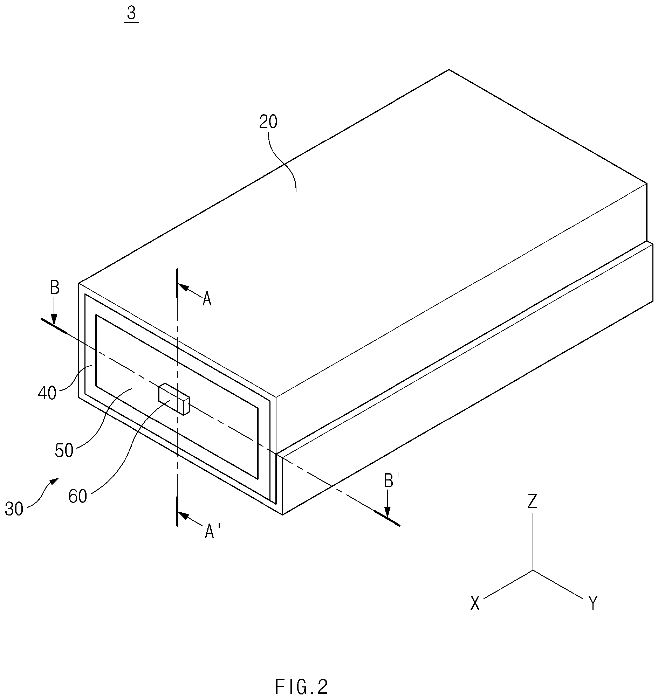

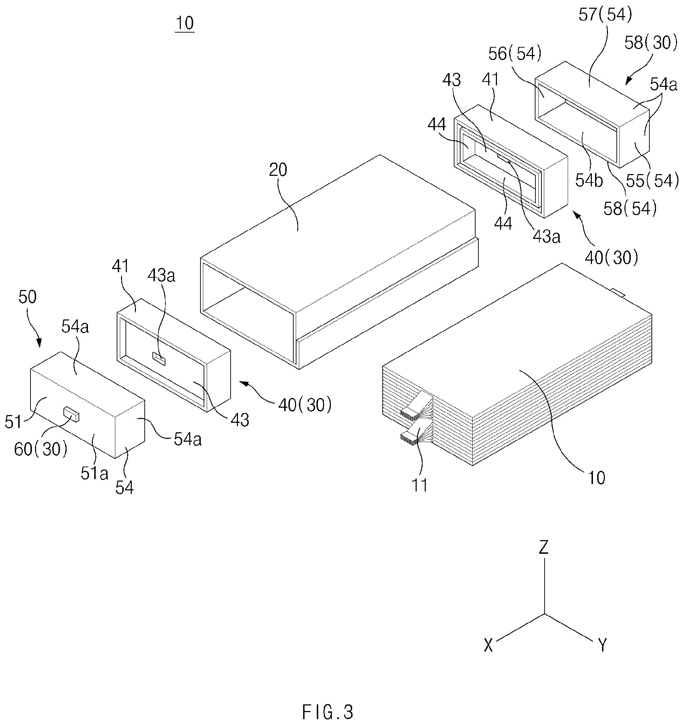

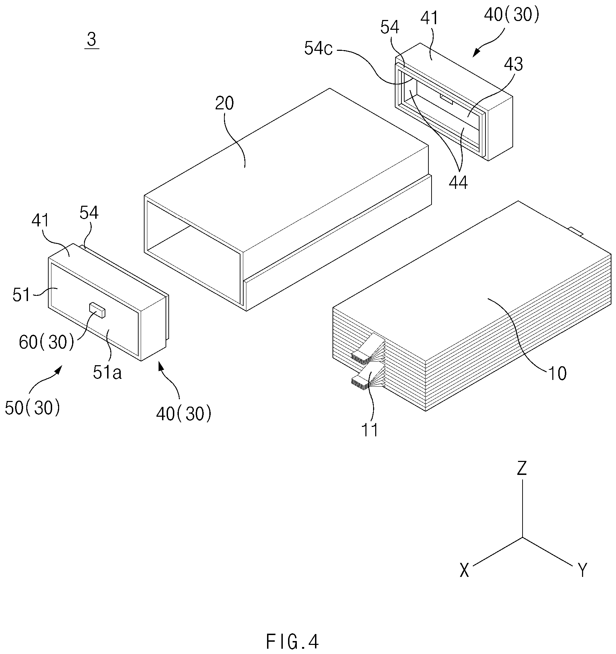

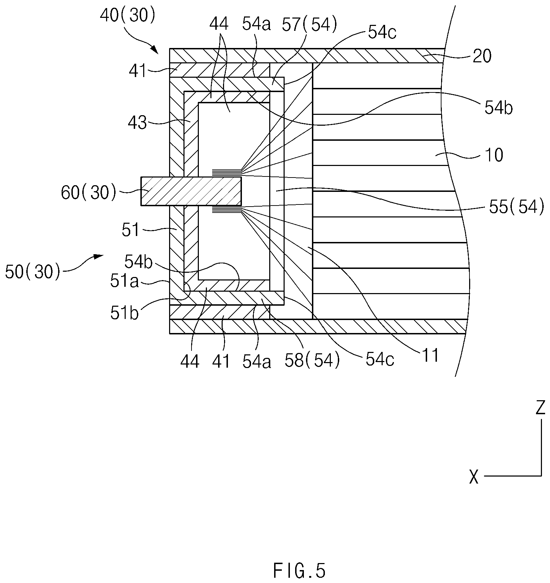

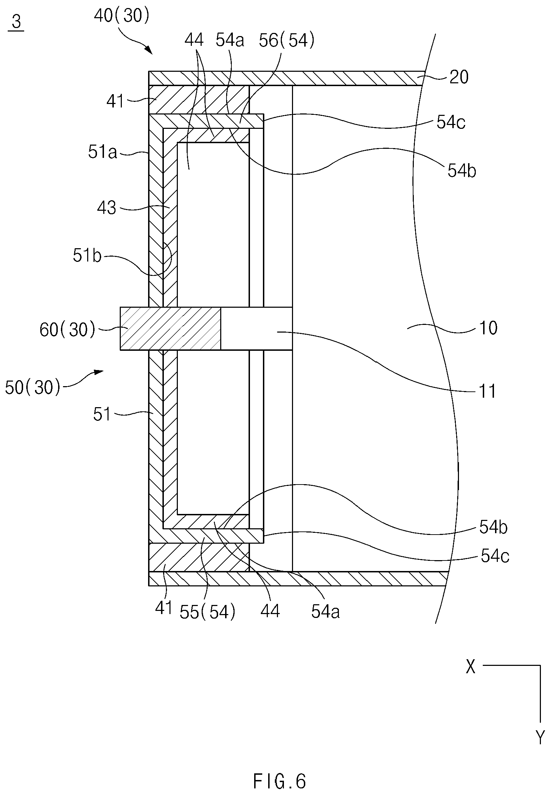

FIG. 2 is a perspective view illustrating a secondary battery when viewed from the above according to a first embodiment of the present invention. FIG. 3 is an exploded perspective view of the secondary battery of FIG. 2. FIG. 4 is an exploded perspective view illustrating a state in which a connection part and a cover part are coupled to each other in FIG. 3. FIG. 5 is a partial cross-sectional view taken along line A-A' of FIG. 2. FIG. 6 is a partial cross-sectional view taken along line B-B' of FIG. 2.

Referring to FIGS. 6 to 6, a secondary battery 3 according to Embodiment 1 of the present invention may include an electrode assembly 10, an exterior film 20, and a cap 30. Hereinafter, each configuration of the secondary battery 3 will be described in more detail. For reference, contents of Embodiment 1 may be equally applied to other embodiments described later, as long as there is no conflict.

Electrode assembly

The electrode assembly 10 of the secondary battery 3 may include a positive electrode, a negative electrode, and a separator. Here, the separator may be disposed between the positive electrode and the negative electrode to physically separate the positive electrode from the negative electrode. The electrode assembly 10 may be provided in a form in which the positive electrode, the negative electrode, and the separator are stacked, or a jelly-roll form in which the positive electrode, a negative electrode, and a separator are wound. The type or structure of the electrode assembly 10 is not particularly limited. The electrode assembly 10 may extend in one direction (X-axis direction), which may correspond to an extension direction of the electrode assembly 10, and have a predetermined length. The electrode assembly may have two end faces and extend in the extension direction (x-axis direction) between the two end faces.

The electrode assembly 10 may include an electrode tab 11 connected to the electrode. The electrode tab 11 may be provided separately or may be provided as a portion of a current collector constituting the electrode. For reference, if the electrode assembly 10 is an all-solid-state battery, a solid electrolyte may be provided instead of the separator.

Exterior film

Referring to FIGS. 1 to 6, the secondary battery 3 according to Embodiment 1 of the present invention may include the exterior film 20. The exterior film 20 of the secondary battery 3 may be provided to surround (wrap around) a portion of the electrode assembly 10. Specifically, the exterior film 20 may be provided to surround a cap 30, which will be described later, and the electrode assembly 10. More specifically, the exterior film 20 may be coupled to the cap 30 to define an internal space, and the electrode assembly 10 may be accommodated in the internal space.

As illustrated in the drawings, in this embodiment, the exterior film 20 may surround the electrode assembly 10 in a circumferential direction. Here, the circumferential direction may be a direction that surrounds an axis (X-axis) parallel to an extension direction of the electrode assembly 10. The exterior film 20 may be made of a material that is capable of being deformed in a shape so as to be able to surround the electrode assembly 10. The exterior film 20 may be made of an elastic material or an elastic laminate configured to surround, particularly by being wrapped around, the electrode assembly. For example, the exterior film 20 may have predetermined flexibility so that it is bendable by external force.

In addition, the exterior film 20 may be made of a non-elastic material. In the related art, a pouch film is molded to define a space in which the electrode assembly is accommodated. However, since the exterior film 20 does not need to deform its shape through the molding, the exterior film 200 may be made of a non-elastic material. That is, the exterior film 20 may not have elasticity. Alternatively, the exterior film 20 may have certain elasticity as needed.

The exterior film 20 of the secondary battery 3 may have a shape in which a sheet or film is rolled along a side surface of the electrode assembly 10. That is, the exterior film 20 may be disposed to surround a side portion of the electrode assembly 10. Here, one end and the other end of the exterior film 20 may be disposed to meet each other and surround the electrode assembly 10. Regarding the shape in which one end and the other end of the exterior film 20 meet each other, one surface of one end and the other surface of the other end may be coupled so as to be in contact with each other (see FIG. 2). This is only an example, and the form in which one end and the other end of the exterior film 20 are coupled to define a space for accommodating the electrode assembly 10 may vary.

Regarding the method by which one end and the other end of the exterior film 20 are coupled to each other, one end and the other end of the exterior film 20 may be coupled to each other by sealing by heat or sealing by heat and a pressure. That is, the exterior film 20 may include a material that has sealing properties by heat.

As an example of the structure of the exterior film 20, the exterior film 20 may be provided in the form of a film. Specifically, the exterior film 20 may be provided as a plurality of layers including a sealant layer, a barrier layer, and an insulating layer. More specifically, the exterior film 20 may be disposed in order of the sealant layer, the barrier layer, and the insulating layer from the inside close to the electrode assembly 10.

The sealant layer may include a material having sealing properties by heat so that one end and the other end of the exterior film 20 are coupled to each other. For example, the sealant layer of the exterior film 20 may include at least one or more materials selected from the group consisting of polyethylene, polypropylene, polycarbonate, polyethylene terephthalate, polyvinyl chloride, acrylic polymer, polyacrylonitrile, polyimide, polyamide, cellulose, aramid, nylon, polyester, polyparaphenylene benzobisoxazole, polyarylate, teflon, and glass fiber. Mainly, a polyolefin-based resin such as polypropylene (PP) or polyethylene (PE) may be used. Particularly, polypropylene (PP) may be excellent in mechanical properties such as tensile strength, rigidity, surface hardness, abrasion resistance, and heat resistance and chemical properties such as corrosion resistance.

The barrier layer may include a metal. For example, the metal of the barrier layer may be made of one or more materials selected from the group consisting of Fe, C, Cr, Mn, Ni and Al. For example, the barrier layer may include stainless steel (STS). In addition, the barrier layer may be made of an alloy such as an aluminum alloy.

The insulating layer may include an insulating material. That is, the electrode assembly 10 may be insulated from the outside by the insulating layer. Therefore, the insulating layer may prevent short circuit of the exterior film 20 from occurring. For example, the insulating layer may include at least one or more materials selected from the group consisting of polyethylene, polypropylene, polycarbonate, polyethylene terephthalate, polyvinyl chloride, acrylic polymer, polyacrylonitrile, polyimide, polyamide, cellulose, aramid, nylon, polyester, polyparaphenylene benzobisoxazole, polyarylate, teflon and glass fiber. Mainly, a polymer such as a nylon resin or polyethylene terephthalate (PET) having abrasion resistance and heat resistance may be used.

The exterior film 20 may be disposed to surround (wrap around) a portion of the electrode assembly 10 so as to form at least one opening. The cap 30 may be configured to close and/or seal the at least one opening. Further, the cap 30 may be disposed to surround a remaining portion of the electrode assembly 10. Particularly, when the exterior film 20 is disposed to surround the electrode assembly 10 along a side surface (outer circumferential surface) of the electrode assembly 10, an opening that is defined as an edge of the exterior film 20 may be defined in each of both ends of the electrode assembly 10. Here, the opening may be disposed at each of both sides of the extension direction (X-axis direction) of the electrode assembly 10.

The cap 30 of the secondary battery 3 may be coupled to the exterior film 20 in a form that covers the openings at both the sides of the electrode assembly 10. In addition, the electrode assembly 10 may be accommodated in the internal space defined by the exterior film 20 and the cap 30.

The exterior film 20 may be coupled to the cap 30. As an example of a method of coupling the cap 30 to the exterior film 20, the cap 30 and the exterior film 20 may be coupled to each other by welding. Specifically, the connection part 40 to be described later may include a metal material, and the exterior film 20 may include a metal layer, which is capable of being coupled to the connection part 40 by welding, at a portion facing the connection part 40.

As another example of a method of coupling the cap 30 to the exterior film 20, the cap 30 and the exterior film 20 may be coupled to each other by sealing. Specifically, the connection part 40 may include a resin material that has adhesive properties by heat, and the exterior film 20 may include a resin layer, which is capable of being coupled to the connection part 40 by heat and a pressure, at a portion facing the connection part 40. Here, the resin layer may include a material having sealing properties by heat as described above.

In the pouch cell according to the related art, a cup part that accommodates the electrode assembly 10 may be molded by molding a sheet or film. During the molding process of the cup part, a moldable depth may be limited depending on the material characteristics of the sheet or film, and the capacity at which the electrode assembly 10 is accommodated may also be limited. In addition, when molding the sheet or film, a thickness at a corner is the thinnest, which often resulted in defects such as cracks. In addition, the pouch cell according to the related art may require a gas collection part to collect a gas during the degassing process so as to remove the gas accumulated inside the pouch, and a large portion of the gas collection part may be removed and discarded after the degassing process.

On the other hand, in the secondary battery 3 according to the first embodiment of the present invention, the exterior film 20 may be used to match a volume of the electrode assembly 10, and thus, a limit to the capacity at which the electrode assembly 10 is accommodated may not occur. In addition, since there is no need for molding the cup part, it is possible to prevent defects such as cracks from occurring in the exterior film 20, and the material and thickness of the exterior film 20 may be relatively freely selected. In addition, since the electrolyte injection and the degassing process are carried out through the cap 30, economic efficiency of the process may be improved because the exterior film 20 is not generated to be discarded.

Cap

Referring to FIGS. 2 and 6, the cap 30 of the secondary battery 3 according to the first embodiment of the present invention may include a connection part 40, a cover part 50, and a terminal part 60. In this embodiment, the cap 30 may seal the electrode assembly 10 together with the exterior film 20. As a result, emission of a gas or flame due to an abnormal internal behavior may be directed (or concentrated) toward the exterior film 20, and thus, stability of the secondary battery 3 may be improved.

The connection part 40 of the cap 30 may be coupled to the exterior film 20. The connection part 40 may be provided between the cover part 50 and the exterior film 20. In addition, the cover part 50 of the cap 30 may be coupled to the connection part 40 and may be partially exposed to the outside of the connection part 40. Particularly, one surface of the cover layer 50 may be exposed to the outside of the connection part 40.

Here, the inside of the connection part 40 may refer to a portion of the internal space defined by the cap 30' and the exterior film 20, and the outside of the connection part 40 may be referred to as an external space of the cap 30 and the exterior film 20.

In addition, one surface of the cover part 50 exposed to the outside of the connection part 40 may be an outward surface 51a facing the outside. The outward surface 51a may be provided on a cover portion 51 of the cover part 50 described later. A surface facing the outward surface 51a of the cover portion 51 may be called an inward surface 51b. The inward surface 51b may be a surface facing the electrode assembly 10.

Referring to FIGS. 2 to 6, in this embodiment, the connection part 40 may include a coupling portion 41. The coupling portion 41 may be a portion that directly couples the cover part 50 to the exterior film 20 described later. As necessary, the coupling portion 41 may be provided as a plurality of layers including a single layer, which includes one material, a single layer, which include materials different from each other, a plurality of layers, which include materials different from each other, respectively, or a plurality of layers, each of which includes a different material.

In this embodiment, the coupling portion 41 may be provided on an outer surface 54a of an extension portion 54 in the cover part 50. Here, the outer surface 54a of the extension portion 54 may be a surface facing the outside (or outer circumferential surface). The coupling portion 41 may be provided between the extension portion 54 and the exterior film 20 to couple the extension portion 54 to the exterior film 20.

In this embodiment, the coupling portion 41 may be provided along the outer surface 54a (or outer circumferential surface) of the extension portion 54. As will be described in detail later, in this embodiment, since the extension portion 54 has a ring shape, the coupling portion 41 may also have a ring shape corresponding to the extension portion 54. Here, the ring shape may be a shape viewed in the longitudinal direction (X-axis direction) of the electrode assembly 10. The shape of the coupling portion 41 may be appropriately modified depending on the structure of the cover part 50.

In addition, in this embodiment, the connection part 40 may include an inner portion 43. The inner portion 43 may be provided on the inward surface 51b of the cover portion 51. The inner portion 43 may cover the entire inward surface 51b. The inner portion 43 may have a plate shape having a predetermined thickness. As a result, heat transfer or moisture penetration through the cover portion 51 may be effectively suppressed. A terminal hole 43a may be provided in the inner portion 43. The terminal hole 43a may be a hole through which the terminal part 60 described later passes.

In this embodiment, the connection part 40 may include an extension portion-side portion 44. The extension portion-side portion 44 may be provided on the inner surface 54b (or inner circumferential surface) of the extension portion 54 in the cover part 50 described later. Here, the inner surface 54b of the extension portion 54 may be a surface facing the outer surface 54a. The inner surface 54b may be a surface facing inward.

In this embodiment, the extension portion-side portion 44 may be provided along the inner surface 54b (or inner circumferential surface) of the extension portion 54. Here, since the extension portion 54 has a ring shape, the extension portion-side portion 44 may also have a ring shape corresponding to the extension portion 54. Here, the ring shape may be a shape viewed in the longitudinal direction (X-axis direction) of the electrode assembly 10. The shape of the extension portion 44 may be appropriately modified according to the structure of the cover part 50.

Here, the extension portion-side portion 44 and the inner portion 43 may be connected to each other. In other words, the extension portion-side portion 44 may extend from the inner portion 43. The extension portion-side portion 44 may extend from an edge portion of the inner portion 43. As a result, the rigidity reinforcement, the moisture penetration prevention, and the heat transfer suppression effects of the cap 30 by the connection part 40 may be improved.

As an example of a configuration for electrical connection to the outside, the cap 30 of the secondary battery 3 according to the first embodiment of the present invention may include the terminal part 60. The terminal part 60 may be electrically connected to the electrode assembly 10 and extend outside of the cover part 50 and/or the connection part 40. The terminal part 60 may pass through the connection part 310 and the cover part 50 and be exposed to each of the outside and inside of the connection part 40. The terminal part 60 may terminate at a flat surface that is proximal to the electrode assembly 10 and faces the electrode assembly 10. A portion of the terminal part 60 exposed to the inside of the connection part 40 may be electrically connected to the electrode assembly 10. Here, the electrical connection may include both direct connection between the terminal part 60 and the electrode assembly 10 and indirect connection through another electrically conductive member. A portion of the terminal part 60 exposed to the outside of the connection part 40 may be electrically connected to the outside.

For the electrical connection between the electrode assembly 10 and the outside, the terminal part 60 may include an electrically conductive material. The terminal part 60 may be disposed to protrude outward from the connection part 40 (see FIG. 2). Thus, the secondary battery 3 may be electrically connected to the outside in more various forms and may efficiently provide electrical energy to the outside.

Hereinafter, a configuration of the terminal part 60 will be described in more detail. The terminal part 60 may extend through the connection part 40 and/or the cover part 50 in the extension direction (x-axis direction) of the electrode assembly 10. The terminal part 60 may have a cross-sectional area that is constant within the connection part 40 and/or the cover part 50. The terminal part 60 of the cap 30 according to the first embodiment of the present invention may extend from the inside of the connection part 40 to the outside of the connection part 40. Here, the terminal part 60 may be provided to have a constant cross-sectional area in a longitudinal direction. For example, the terminal part 60 may have a cylindrical or rectangular parallelepiped shape. Here, the terminal part 60 having the rectangular parallelepiped shape will be described as an example. The terminal part 60 having the constant cross-sectional area in the longitudinal direction may be relatively easy to be manufactured.

The electrode assembly 10 may include electrodes and separators, which are stacked in parallel. Here, the terminal part 60 may have one surface and the other surface, which are disposed at both ends of a portion exposed to the inside of the connection part 40, to be flat based on the stacking direction of the electrodes and the separators. Referring to FIG. 4, one surface and the other surface disposed at both the ends of the terminal part 60 may be surfaces that are in contact with the electrode tab 11 of the electrode assembly 10. With this shape, the terminal part 60 may be more efficiently connected to the electrode tab 11.

In addition, when the secondary battery 3 includes a plurality of electrode assemblies 10, the electrode tabs 11 of the plurality of electrode assemblies 10 may be electrically connected to one side and the other side of the terminal part 60, respectively. As a result, the secondary battery 3 may be improved efficiently in battery capacity.

In addition to the shape described in the first embodiment of the present invention, the terminal part 60 may have various shapes for efficient electrical connection. Although not specifically shown in the drawings, a predetermined gasket may be provided on an outer circumferential portion of the terminal part 60. The gasket may be configured to prevent leakage of an electrolyte. The gasket may be interposed between the outer circumferential portion of the terminal part 60 and the cover part 50. The gasket may be made of a polymer material such as plastic or rubber.

Hereinafter, the structure of the cover part 50 will be described in more detail. The cover part 50 may be configured to cover one of the two end faces of the electrode assembly 10. Generally for all examples shown herein, the cover part 50 may be at least partly embedded in the connection part 40, by being inserted into a recessed portion and/or an opening formed in the connection part 40.

As an example of a configuration to improve the structural stability of the cap 30, at least a portion of the cover part 50 of the cap 30 according to the first embodiment of the present invention may be embedded in the connection part 40. In this regard, the cover part 50 of the cap 30 may include a cover portion 51 and an extension portion 54.

The cover portion 51 of the cover part 50 may be disposed at one side in the longitudinal direction (X-axis direction) of the electrode assembly 10. The cover portion 51 may cover the one side of the electrode assembly 10. The cover portion 51 may have a square plate shape, but the shape of the cover portion 51 is not particularly limited as long as it partially covers the electrode assembly 10.

The outward surface 51a of the cover portion 51 may be provided to be exposed to the outside of the connection part 40. Here, the outward surface 51a may be a surface of the outer surface of the cover portion 51, which faces the outside of the electrode assembly 10. In the extension direction (x-axis direction) away from the electrode assembly 10, the cover part 50 may extend as far as the connection part 40, or farther away than the connection part 40 from the electrode assembly 10. Here, the outward surface 51a of the cover portion 51 may be disposed on the same surface as one surface of the connection part 40. More specifically, the outward surface 51a may be disposed on the same surface as one surface of the coupling portion 41 of the connection part 40 described later. Alternatively, the outward surface 51a may be disposed further outward than the one surface of the coupling portion 41.

Due to this configuration, space utilization may be improved when arranging the plurality of secondary batteries 3. Here, the outward surface 51a may mean a surface facing forward (positive direction of the X-axis) from the cover portion 51 based on FIG. 6, and one surface of the coupling portion 41 may mean an end surface facing forward (positive direction of the X-axis).

The extension portion 54 of the cover part 50 may extend toward the electrode assembly 10. That is, the extension portion 54 may extend from the cover portion 51 toward the electrode assembly 10. Specifically, the extension portion 54 may be provided so that an end surface 54c at a side of the electrode assembly 10 is exposed to the inside of the connection part 40. Here, the extension portion 54 may extend from an edge of the cover portion 51.

Referring to FIGS. 5 and 6, the extension portion 54 of the cover part 50 may be provided in plurality. Here, at least one extension portion 54 may be provided so that the end surface 54c at the side of the electrode assembly 10 is exposed to the inside of the connection part 40. Specifically, in the plurality of extension portions 54 extending from the cover portion 51 toward the electrode assembly 10, a portion of the extension portions may be embedded in the connection part 40, and the other portion may be exposed to the inside of the connection part 40.

However, in the first embodiment of the present invention, an example is given in which all of the plurality of extension portions 54 are exposed to the inside of the connection part 40. Specifically, the plurality of extension portions 54 may include first to fourth extension portions 55 to 58. The first to fourth extension portions may be connected to each other to form a rectangular annular shape, when viewed in a direction parallel to the extension direction (x-axis direction).

Referring to FIGS. 5 and 6, the first and second extension portions 55 and 56 may extend parallel from both sides in a width direction (Y-axis direction) of the cover portion 51. The second extension portion 56 may be provided at a predetermined distance from the first extension portion 55 and extend parallel thereto toward the electrode assembly 10. The first extension portion 55 and the second extension portion 56 may be disposed at a predetermined distance in the width direction. Here, the width direction (Y-axis direction) may be a direction perpendicular to the direction in which an electrode and a separator are stacked (Z-axis direction). Each of the first and second extension portions 55 and 56 may have a partition wall (or plate) shape having a predetermined thickness.

The third and fourth extension portions 57 and 58 may extend parallel to each other from both sides in the height direction (Z-axis direction) of the cover portion 51. The third extension portion 57 may extend between the first extension portion 55 and the second extension portion 56. The fourth extension portion 58 may extend between the first extension portion 55 and the second extension portion 56, and be provided at a predetermined distance from the third extension portion 57. The third and fourth extension portions 57 and 58 may extend in parallel toward the electrode assembly 10. The third extension portion 57 and the fourth extension portion 58 may be disposed at a predetermined distance in the height direction. Here, the height direction (Z-axis direction) may be parallel to the direction in which the electrode and the separator are stacked (Z-axis direction). Each of the third and fourth extension portions 57 and 58 may have a partition wall (or plate) shape having a predetermined thickness.

Here, the first to fourth extension portions 55 to 58 may be connected to each other. As a result, when viewed in the longitudinal direction (X-axis direction) of the electrode assembly 10, the first to fourth extension portions 55 to 58 may have an overall ring shape. In other words, each of the first to fourth extension portions 55 to 58 may have a ring shape along the circumferential direction of the electrode assembly 10. Here, the ring shape may be a shape viewed in the longitudinal direction (X-axis direction) of the electrode assembly 10.

Referring to FIG. 5, the end surface 54c of the extension portion 54 exposed to the inside of the connection part 40 may be disposed at a predetermined distance from the electrode assembly 10. Thus, the electrode assembly 10 may be prevented from being damaged by the extension portion 54.

In this embodiment, it has been described that the extension portion 54 is constituted by first to fourth extension portions 55 to 58. However, if necessary, the extension portion 54 may be configured to include only some of the first to fourth extension portions 55 to 58. For example, the extension portion 54 may be constituted by first and second extension portions 55 and 56 and configured to be opened in the height direction (Z-axis direction).

Referring to FIGS. 2 to 6, the extension portion 54 may be embedded in the connection part 40 in a form that is fitted into a groove defined in the connection part 40. When portions of the cover portion 51 and the extension portion 54 are fitted into the connection part 40, the connection part 40 and the cover part 50 may be coupled to each other (see FIGS. 2 to 6). Here, the connection part 40 and the extension portion 54 may adhere to each other by heat sealing. In addition, the connection part 40 and the extension portion 54 ma adhere to each other through an adhesive applied therebetween. Here, the type and application form of the adhesive for adhering between the connection part 40 and the extension portion 54 may vary. The adhesive may be made a material with relatively high hydrophobicity.

When the connection part 40 and the extension portion 54 are bonded to each other by the sealing, the connection part 40 may include a resin material that has adhesive properties due to heat. That is, the resin material of the connection part 40 having the adhesive properties may be melted by heat, and the connection part 40 may adhere to the extension portion 54 by a pressure. Through this, the connection part 40 and the cover part 50 may be coupled to each other.

Although not described in detail in the present invention, the cap 30 may further include an electrolyte injection port for injecting an electrolyte or a gas discharge port for discharging the gas in the degassing process.

In the cap 30 of the secondary battery 3 according to the first embodiment of the present invention, the connection part 40 and the cover part 50 of which at least a portion is embedded in the connection part 40 may cover the electrode assembly 10. Depending on the material of the connection part 40, moisture on the outside of the connection part 40 may be permeated into the connection part 40 through the connection part 40. The permeation of the moisture may cause defects in the secondary battery 3.

In the cap 30 of the secondary battery 3 according to the first embodiment of the present invention, the cover part 50 including a material having excellent water resistance such as a metal may cover the electrode assembly 10 together with the connection part 40. Thus, an area of the connection part 40 of the cap 30 through which moisture is permeated may be reduced. In addition, since at least a portion of the cover part 50 is disposed in a shape of being embedded in the connection part 40, it may be difficult for moisture to be penetrated between the cover part 50 and the connection part 40. Thus, the secondary battery 3 according to the first embodiment of the present invention may reduce an amount of moisture permeated into the secondary battery to reduce a limitation in performance of the secondary battery 3.

In addition, the cap 30 of the secondary battery 3 according to the first embodiment of the present invention may be disposed in a state in which the extension portion 54 of the cover part 50 is embedded in the connection part 40. Thus, since the connection part 40 restricts movement of the cover part 50 to prevent the cover part 50 from being separated, the structural stability of the secondary battery 3 may be improved.

In addition, since the cap 30 of the secondary battery 3 includes the terminal part 60, the cap 300 may be efficiently electrically connected to the outside. In addition, the terminal part 60 may be connected to various types of electrode assemblies 10 by changing its shape and arrangement and may be efficiently connected to the electrode tab 11 even when the number of electrode tabs 11 increases.

Although not described in detail in the first embodiment of the present invention, the cap 30 may further include a gas discharge member (not shown) that discharges a gas inside the secondary battery 3 or a venting member (not shown) that induces venting in a specific direction.

Embodiment 2

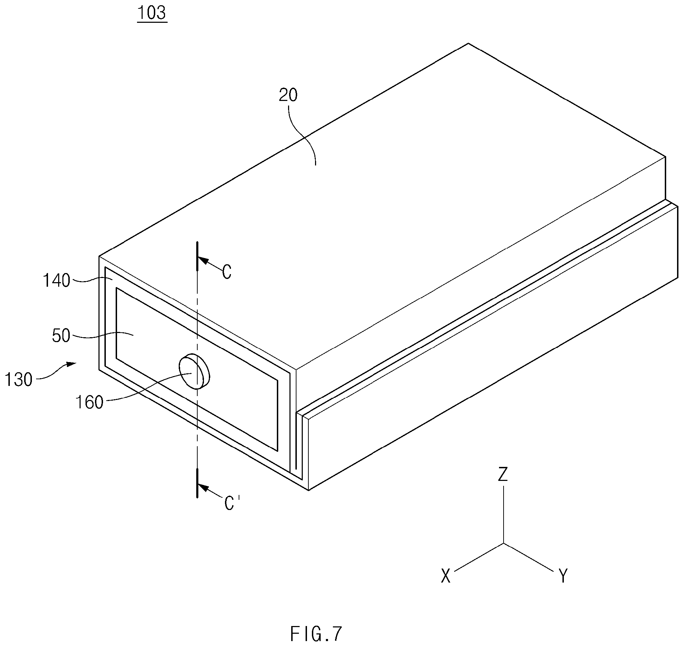

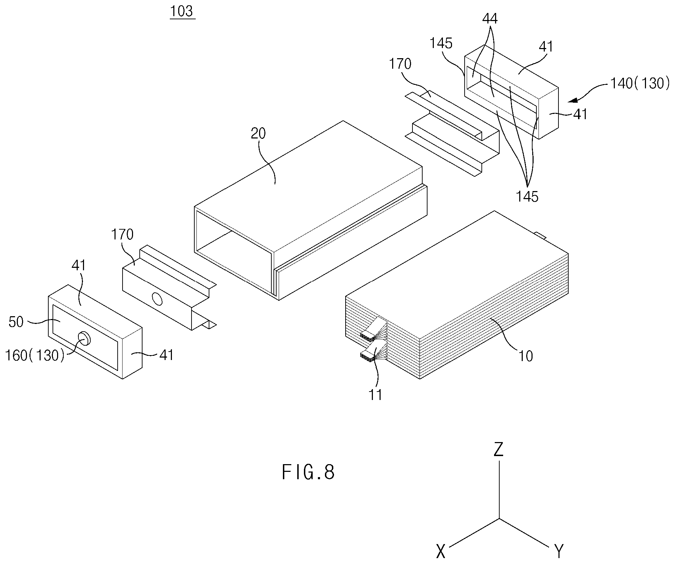

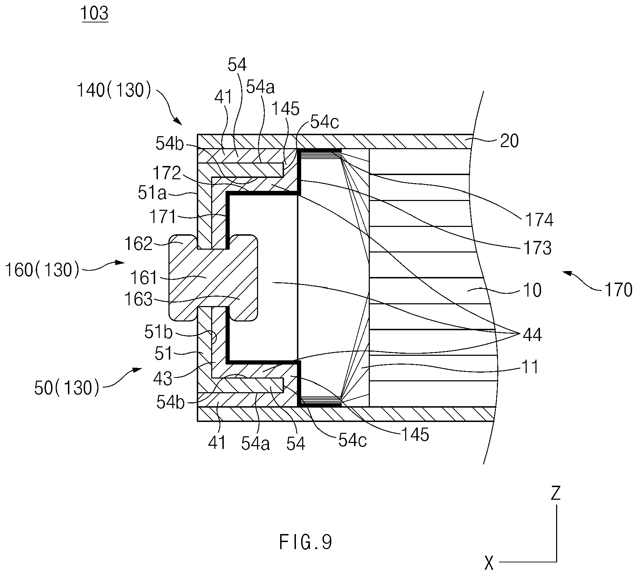

FIG. 7 is a perspective view illustrating a secondary battery when viewed from the above according to a second embodiment of the present invention. FIG. 8 is an exploded perspective view of the secondary battery of FIG. 7. FIG. 9 is a partial cross-sectional view taken along line C-C' of FIG. 7.

Hereinafter, a detailed description of the same configuration as that of the secondary battery 3 (shown in FIG. 2) according to the first embodiment of the present invention will be omitted, and differences between the first embodiment and the second embodiment will be specifically described.

Referring to FIGS. 7 to 9, a secondary battery 103 according to a second embodiment of the present invention may be different from the secondary battery 3 (shown in FIG. 2) according to the first embodiment in a shape of a connection part 140, a shape of a terminal part 160, presence or absence of a busbar 170, a coupling method of the configurations, etc. The secondary battery 103 according to the second embodiment of the present invention may include an electrode assembly 10, an exterior film 20, and a cap 130.

Here, the exterior film 20 of the secondary battery 103 may have a shape in which a sheet or film is rolled along a side surface of the electrode assembly 10. That is, the exterior film 20 may be disposed to surround a side portion of the electrode assembly 10. Here, one end and the other end of the exterior film 20 may be disposed to meet each other and surround the electrode assembly 10. Regarding the form in which one end and the other end of the exterior film 20 meet each other, one surface of one end and one surface of the other end may be coupled so as to be in contact with each other (see FIG. 7). This is only an example, and the form in which one end and the other end of the exterior film 20 are coupled to define a space for accommodating the electrode assembly 10 may vary.

Referring to FIGS. 7 to 9, the cap 130 of the secondary battery 103 may include a connection part 140, a cover part 50, and a terminal part 160. The connection part 140 of the cap 130 may be coupled to the exterior film 20, and the cover part 50 of the cap 130 may be coupled to the connection part 140 so that a portion of the cover part 320 is exposed to the outside of the connection part 140. The terminal part 160 of the cap 130 may be disposed to pass through the connection part 140 and the cover part 50. In addition, one end and the other end of the terminal part 160 may be exposed to the outside and inside of the connection part 140.

Hereinafter, each configuration of the cap 130 will be described in more detail.

In this embodiment, the cover part 50 may be configured in the same manner as the cover part of the secondary battery according to the first embodiment. Specifically, the cover part 50 may include a cover portion 51 and an extension portion 54. One surface of the cover portion 51 may be disposed so as to be exposed to the outside of the connection part 140. Hereinafter, the one surface is called an outward surface 51a, and a surface opposite to the outward surface 51a is called an inward surface 51b. The inward surface 51b may be a surface facing the electrode assembly 10.

Here, in this embodiment, the extension portion 54 may be disposed in a form that is completely embedded in the connection part 140. That is, one end of the extension portion 54 may not be exposed to the inside of the connection part 140. For this purpose, the extension portion 54 may include an end-side portion 145. The end-side portion 145 may be a portion covering an end surface 54c of the extension portion 54. As a result, the extension portion 54 may be entirely embedded in the connection part 140.

This structure may secure not only structural stability of the cap 30, but also stability of the coupling portion 41 at which the cap 30 and the exterior film 20 are sealed. In particular, one may expect an advantage of being able to control a venting direction. If the extension portion 54 is completely embedded by the connection part 140, and thus, there is no exposed portion at the inside thereof, a possibility of separation of the coupling portion 41 from the extension portion 54 of the cover part 50 may be eliminated.

That is, in a situation in which an internal pressure of the secondary battery 3 rapidly increases so that the internal gas is explosively emitted, or in a situation in which fire occurs so that flame is emitted to the outside, since there is no crack in the direction of the cap 30, through which the flame or gas is emitted, the venting may be controlled to be prevented from occurring in the direction of the cap 30. Thus, there is an advantage in that it is possible to resolve a heat transfer phenomenon that may occur due to the venting occurring in the direction of the cap 30 in a state of being assembled into a battery pack.

Here, in this embodiment, the end-side portion 145 may have a ring shape corresponding to the shape of the extension portion 54. Here, the ring shape may be a shape viewed in the extension direction (X-axis direction) of the electrode assembly 10.

In this embodiment, the end-side portion 145 may be connected to each of the coupling portion 41 and the extension portion-side portion 44. As a result, the extension portion 54 may be completely embedded by the connection part 140.

Due to this configuration, the moisture penetration into the space in which the electrode assembly 10 is accommodated may be further suppressed. This is because a certain gap through which moisture may be penetrated may occur at the bonded portion between the outer surface 54a of the extension portion 54 and the coupling portion 41, and this gap is blocked by the end-side portion 145.

In addition, due to the above-described configuration, in an abnormal situation such as an increase in internal pressure or an explosion, the discharge of the gas or flame may be induced toward the exterior film 20. This is because the gap between the outer surface 54a of the extension portion 54 and the coupling portion 41 is blocked by the end-side portion 145 so that the discharge of the gas or flame through the cap 130 is suppressed.

As described above, in the second embodiment of the present invention, since the extension portion 54 is disposed in a form that is completely embedded in the connection part 140, the structural stability of the cap 30 may be improved, and the discharge direction of the gas or flame may also be effectively controlled. In addition, there is no protruding shape on the other surface of the connection part 140 facing the electrode assembly. A portion of the busbar 170, which will be described later, may be disposed on this portion.

Regarding the structure of the terminal part 160 of the cap 130, the terminal part 160 may include a body part 161, an outer part 162, and an inner part 163. Specifically, the outer part 162 may be connected to one end of the body part 161, and the inner part 163 may be connected to the other end.

The body part 161 of the terminal part 160 may be disposed within a through-hole through the connection part 140 and the cover part 50. The body part 161 may be disposed to pass through the connection part 140 and the cover part 50. That is, an outer circumferential surface of the body part 161 may be in contact with the connection part 140 and the cover part 50. A predetermined gasket for preventing an electrolyte from leaking may be provided around the outside of the body part 161.

The outer part 162 may extend from the body part 161 to the outside of the connection part 140 and/or the cover part 50. The outer part 162 of the terminal part 160 may be exposed to the outside of the connection part 140. Thus, when the secondary battery 103 is electrically connected to the outside to provide electrical energy, the outer part 162 may be connected to the outside. The inner part 163 may extend from the body part 162 toward the electrode assembly 10. The inner part 163 may be provided and/or deformed so as to have a cross-sectional area greater than the through hole through the connection part 140 and/or the cover part 50. The inner part 163 of the terminal part 160 may be exposed to the inside of the connection part 140. Thus, the inner part 163 may be electrically connected to the electrode assembly 10.

A cross-sectional area of the outer part 162 may be greater than a cross-sectional area of the through-hole through the connection part 140 and/or the cover part 50 so that movement of the terminal part 160 in the extension direction (x-axis direction) toward the electrode assembly 10 may be restricted. Each of the outer part 162 and the inner part 163 of the terminal part 160 according to the second embodiment of the present invention may have a cross-sectional area greater than that of the body part 161. Referring to FIG. 9, the terminal part 160 may be fitted into the connection part 140 and the cover part 50 by the outer part 162 and the inner part 163. Thus, the terminal part 160 may be prevented from being separated to improve structural stability of the cap 130.

Each of the body part 161, the outer part 162, and the inner part 163 of the terminal part 160 according to the second embodiment of the present invention may have a substantially cylindrical shape. That is, each of the body part 161, the outer part 162, and the inner part 163 may have a substantially circular cross-section. This is only an example, and the body part 161, the outer part 162, and the inner part 163 may have cross-sections different from each other.

As previously described, the inner part 163 of the terminal part 160 extending to the inside of the connection part 140 may be electrically connected to the electrode assembly 10. Here, the electrical connection may include both direct connection between the inner part 163 and the electrode assembly 10 and indirect connection through another electrically conductive member.

When the inner part 163 and the electrode assembly 10 are directly connected to each other, the electrode tab 11 of the electrode assembly 10 may be connected to the inner part 163. In addition, when the inner part 163 and the electrode assembly 10 are indirectly connected to each other, the secondary battery 103 may include a busbar 170 as an example of an electrically conductive member serving as a medium. The electrode assembly 10 may comprise a plurality of electrode tabs 11 each physically and/or electrically coupled to the busbar 170.

The busbar 170 may electrically and/or physically connect between the terminal part 160 and the electrode assembly 10. The busbar 170 may be disposed between the connection part 140 and the electrode assembly 10 to connect one end of the inner part 163 exposed to the inside of the connection part 140 to the electrode assembly 10. The terminal part 160 may extend through the busbar 170. The busbar 170 may be made of a metal to have electrical conductivity. In addition, the busbar 170 may be disposed in various shapes depending on a length of the inner part 163.

The busbar 170 may extend in toward the electrode assembly 10 in a folded manner. As an example of a configuration for efficient arrangement, the busbar 170 according to the second embodiment of the present invention may include a first metal part 171, a second metal part 172, a third metal part 173, and a fourth metal part 174. The first to fourth metal parts may respectively correspond to the first to fourth busbar parts as described above.

Referring to FIG. 9, the first metal part 171 may be in contact, particularly in direct or physical contact, with the connection part 140 and the inner part 163. One surface of the first metal part 171 facing the connection part 140 may be disposed to be in contact with the connection part 140. In addition, the other surface of the first metal part 171 facing the inner part 163 may be disposed to be in contact with the inner part 163. In this regard, the first metal part 171 may have a substantially plate shape, and a hole may be defined in a center thereof. The body part 151 of the terminal part 160 may pass through the hole of the first metal part 171, and the other surface of the first metal part 171 facing the inner part 163 may be in contact with the inner part 163. The busbar 170 may engage with the terminal part 160 so as to at least partly extend between the terminal part 160 and the cover part 50 and/or the connection part 140. That is, the first metal part 171 of the busbar 170 may be disposed to be hooked on the inner part 163 so that movement in the direction toward the electrode assembly 10 is limited by the inner part 163. Thus, effective fixation of the busbar 170 may be possible. The terminal part 160 may include a metal material, and the inner part 163 of the terminal part 160 and the first metal part 171 may be coupled to each other through welding.

The second metal part 172 may extend from the first metal part 171 toward the electrode assembly 10. Here, the second metal part 172 may extend in a direction substantially perpendicular to the direction in which the first metal part 171 extends. In addition, one surface of the second metal part 172 that faces the connection part 140 may be in contact with the connection part 140.

The third metal part 173 may extend from the second metal part 172 toward the exterior film 20. Here, the third metal part 173 may extend in a direction substantially perpendicular to a direction in which the second metal part 172 extends. Specifically, the third metal part 173 may extend in a direction away from the inner part 163. In addition, one surface of the third metal part 173 facing the connection part 140 may be in contact with the connection part 140.

The fourth metal part 174 may extend from the third metal part 173 toward the electrode assembly 10. In addition, one surface of the fourth metal part 174 facing the exterior film 20 may be in contact with the exterior film 20.

One end of the fourth metal part 174 may be connected to the electrode assembly 10. Specifically, one end of the fourth metal part 174 may be connected to the electrode tab 11 of the electrode assembly 10. In this regard, each of the second metal part 172, the third metal part 173, and the fourth metal part 174 may be provided in a pair. Here, each of the plurality of electrode tabs 11 of the electrode assembly 10 may be connected to the relatively close fourth metal part 174. Thus, even if the secondary battery 103 includes the plurality of electrode assemblies 10, and the number of electrode tabs 11 increases, the fourth metal part 174 may be efficiently connected to the electrode tab 11.

The busbar 170 according to the second embodiment of the present invention may be disposed to be in contact with the exterior film 20 or the cap 130. Thus, the structural stability of the secondary battery 103 may be improved. In addition, since the busbar 170 includes the first metal part 171, the second metal part 172, the third metal part 173, and the fourth metal part 174, the secondary battery 10 may have various shape according to the number, arrangement, and shape of the electrode assembly 10.

The form of the busbar 170 described in the present invention may be only a preferred example. Thus, the shape and arrangement of the busbar 170 may vary.

Embodiment 3

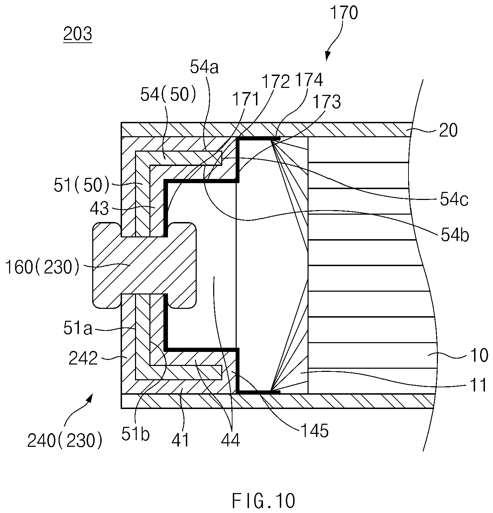

FIG. 10 is a partial cross-sectional view taken along line C-C' of FIG. 7 according to a third embodiment of the present invention.

An electrode assembly, an exterior film, a cover part of a cap, a terminal part, and a busbar of a secondary battery 203 according to a third embodiment of the present invention may be configured identically to the electrode assembly, the exterior film, the cover part of the cap, the terminal part, and the busbar of the secondary battery 103 (shown in FIGS. 7 to 9) according to the second embodiment of the present invention.

Referring to FIG. 10, in the secondary battery 203 according to the third embodiment of the present invention, the connection part 240 of the cap 230 may further include an outer portion 242. The outer portion 242 may be configured to cover an outward surface 51a of a cover portion 51 facing the outside of the electrode assembly 10. As a result, the cover portion 51 may have an outward surface 51a and an inner surface 51b, which are covered by the outer portion 242 and an inner portion 43, respectively. That is, the cover portion 51 may be entirely embedded in the connection part 240.

In this embodiment, the outer portion 242 may have a plate shape that entirely covers the outward surface 51a. As a result, the cover part 50 may be protected from an external impact and contamination. However, the shape of the outer portion 242 is not particularly limited as long as it may at least partly cover the outward surface 51a.

In this embodiment, an edge portion of the outer portion 242 may be connected to the coupling portion 41. The outer portion 242 may be provided to be integrated with the coupling portion 41. The outer portion 242 may be made of the same material as the coupling portion 41.

As a result, the cover part 50 may be entirely surrounded by the connection part 240, and thus, the coupling between the connection part 240 and the cover part 50 may be improved. In addition, since a gap between the coupling portion 41 and an outer surface 54a of the extension portion 54 is blocked by the outer portion 242, moisture penetration into a space in which the electrode assembly 10 is accommodated may also be very effectively suppressed.

In this embodiment, the body part 161 of the terminal part 160 may pass through the cover part 50 and the inner portion 43 to pass through the outer portion 242. The outer part 162 of the terminal part 160 may be provided at an end of the body part 161. Here, the end of the body part 161 may be a portion facing the outer portion 242.

Here, the outer part 162 may have a larger cross-sectional area than that of the body part 161. Thus, one side of the outer part 162 may be hooked on the outer portion 242, and thus, movement (or detachment) of the terminal part 160 may be restricted.

As described above, in this embodiment, since the outward surface 51a of the cover part 50 is covered by the outer portion 242, not only durability and coupling properties may be improved, but also insulating properties between the terminal part 160 and other components may be improved. In addition, in a thermal runaway situation, heat transfer may be suppressed by the outer portion 242.

Furthermore, in this embodiment, since the cover part 50 made of a metal material is surrounded by the connection part 240, the cap 230 may be easily manufactured by an insert injection process. As a result, productivity of the secondary battery may be improved, the manufacturing process may be simplified, and manufacturing costs may be reduced.

Embodiment 4

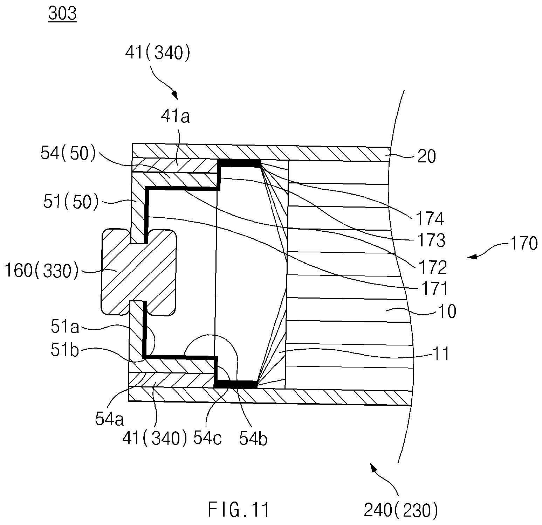

FIG. 11 is a partial cross-sectional view taken along line C-C' of FIG. 7 according to a fourth embodiment of the present invention. Referring to FIG. 11, an electrode assembly 10, an exterior film 20, a cover part 50, a terminal part 160, and a busbar 170 of a secondary battery 303 according to the fourth embodiment of the present invention may be configured in the same manner as the electrode assembly, the exterior film, the cover part, the terminal part, and the busbar of the secondary battery according to the second embodiment.

Here, a connection part 340 in a cap 330 of the secondary battery 303 according to the fourth embodiment of the present invention may include a coupling portion 41. In addition, an outward surface 51a and an inward surface 51b of a cover portion 51 and an inner surface 54b and an end surface 54c of an extension portion 54 may not be covered by the connection part 340. The cover portion 51 may have an outward surface that faces away from the electrode assembly 10. The extension portion 54 may extend from the cover portion 51 toward the electrode assembly 10. The connection part 340 may extend on an outer surface of the extension portion 54.

In other words, the outward surface 51a, the inner surface 51b, the inner surface 54b, and the end surface 54c may be exposed. Alternatively, if necessary, the inward surface 51b, the inner surface 54b, and/or the end surface 54c may be covered at least partially by the busbar 170.

In this embodiment, the connection part 340 may have a polygonal annular shape, a rectangular annular shape, an elliptical annular shape, a circular annular shape, a ring shape or a combination thereof, surrounding the outer surface 54a (or outer circumferential surface) of the extension portion 54. As described above, in this embodiment, the connection part 340 may be simply and compactly configured with only the coupling portion 41. Thus, the secondary battery 303 may be made lightweight while achieving rigidity reinforcement by the cover part 50.

Connection parts 40, 140, 240, and 340 of Embodiments 1 to 4

Modified examples of the connection parts 40, 140, 240, and 340 according to Embodiments 1 to 4 of the present invention, for example, modified examples of the coupling portion 41 of the connection part 40, will be described in more detail. The description of the modified examples may be applied to all of Embodiments 1 to 4 according to the present invention and may include modifications possible for those skilled in the art. Hereinafter, Embodiment 4 is described as a representative example.

First, referring to FIG. 11, the coupling portion 41 of the connection part 340 according to the first embodiment of the present invention may, as a first modified example, include a first layer 41a having an outer surface that includes a first resin and allows coupling to the inner surface of the exterior film 20 and an inner surface that allows coupling to the outer surface of the cover part 50.

The first resin provided in the first layer 41a may be easily applied to the coupling between the cover part 50 and the exterior film 20. For example, the first resin may include a resin selected from the group consisting of a resin having a melting point ($T_m$) of 135°C to 150°C, a resin having a melt flow rate (MFR) of 4 g/10 min to 10 g/10 min at 230°C, and a resin having a melting point ($T_m$) of 135°C to 150°C and a melt flow rate (MFR) of 4 g/10 min to 10 g/10 min at 230°C. In a case in which the first resin having the physical properties is applied to the first layer 41a, thermal resistance may be excellent so that, even when thermal fusion is performed at a high temperature, the first layer 41a may endure without a change in outer appearance to sufficiently secure excellent sealing strength and may have excellent durability against an increase in internal pressure due to a gas generated inside the secondary battery.

For example, the first resin may include a modified polyolefin resin. The first layer may include the first resin in amount of more than 50 wt%, preferably 70 wt% or more, 80 wt% or more, or 90 wt% or more. The first resin may be applied alone, and in a case in which the first resin is mixed, the residue may include an appropriate resin such as other polyolefin-based resins.

The modified polyolefin resin may be modified by acid or siloxane, preferably modified by acid, and more preferably may be polyolefin copolymerized with a monomer containing acrylic acid or post-treated with acid. For example, the modified polyolefin resin may be acid-modified polypropylene or acid-modified polyethylene, and plasma-treated polypropylene or polyethylene may be applied, and more preferably, the modified polyolefin resin may include acid-modified polypropylene. In the case in which this modified polyolefin is applied, a functional group introduced by modification may improves the coupling force with a surface of a metal and thus may be more advantageous for adhesion between the metal and the resin. Considering that a metal is applied as a material of the cover part 50, a resin such as the above-described resins may be applied to the connection part 40.

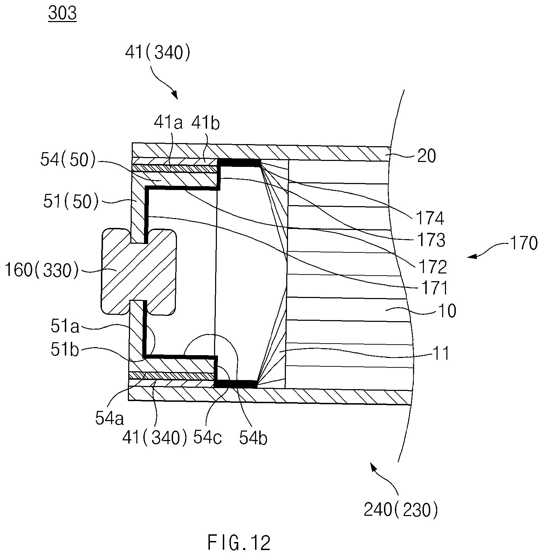

Referring to FIG. 12, the coupling portion 41 of the connection part 340 may, as a second modified example, include a first layer 41a that includes a first resin and allows coupling to the outer surface of the cover part 50, and a second layer 41b that includes a second resin, is stacked on an outer surface of the first layer, and allows coupling to the inner surface of the exterior film 20.

For example, the first resin provided in the first layer 41a may be as described above, and the second resin provided in the second layer 41b may include a resin selected from the group consisting of a resin having a melting point ($T_m$) of 120°C to 145°C, a resin having a melt flow rate (MFR) of 5 g/10 min to 18 g/10 min at 230°C, and a resin having a melting point ($T_m$) of 120°C to 145°C and a melt flow rate (MFR) of 5 g/10 min to 18 g/10 min at 230°C.

As another example, the first resin and the second resin may be selected so as to satisfy at least one selected from a relationship of Expression 1 below and a relationship of Expression 2 below.

[Equation 1]

$$T_{m2} > T_{m1}$$

In Expression 1 above, $T_{m1}$ is a melting point of the first resin, $T_{m2}$ is a melting point of the second resin, and a unit is °C.

[Equation 2]

$$MFR_2 > MFR_1$$

In Expression 2 above, $MFR_1$ is a melt flow rate of the first resin, $MFR_2$ is a melt flow rate of the second resin, and a unit is g/10 min.

When compared to the case in which the connection part is provided as a single layer, in a case in which the connection part 340 is provided as a dual layer, there are advantages in that the coupling force with the cover member 50 and the coupling force with the exterior film 20 are more improved, and thus, the sealing strength is further secured. In particular, in a case in which a resin having a lower melting point or a higher melt flow rate than the first resin applied to the first layer 41a is included as the second resin in the second layer 41b, the physical properties may be more similar to those of the exterior film 20, and this may lead to expectations of not only improvement in sealing processability but also improvement in bonding force due to thermal fusion. Thus, the sealing strength may be increased, and accordingly, the durability against the increase in internal pressure may be significantly improved.

For example, the first resin provided in the first layer 41a may be the same as set forth above, and the second resin provided in the second layer 41b may be, for example, a polyolefin-based resin. The polyolefin-based resin may be different from the first resin in terms of whether a modifying group is introduced or not. The second resin may be an unmodified polyolefin-based resin, may include, for example, a polypropylene or polyethylene, may be a homopolymer thereof, or may be a random copolymer or block copolymer copolymerized with a small quantity of comonomer. An amount of the second resin when the second resin is included in the second layer may be the same as the amount of the first resin when the first resin is included in the first layer.

The polyolefin-based resin may be, for example, a non-stretched polyolefin resin. The non-stretched polyolefin resin may be manufactured through casting without being stretched in a specific direction during the manufacturing or processing process, and be more flexible than a stretched polyolefin resin, do not have a problem of tearing in a specific direction, and be relatively easy to be processed. However, since the connection part 40 may be manufactured by insert injection together with the cover part 50, and certain or higher rigidity may be required due to characteristics of the cap 30, the non-stretched polyolefin resin and the stretched polyolefin resin may be appropriately selected by considering the physical properties of each resin according to the required degree.

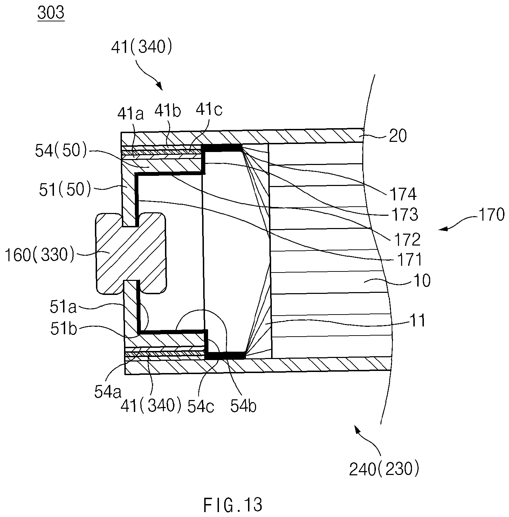

Referring to FIG. 13, the coupling portion 41 of the connection part 340 may, as a third modified example, include a first layer 41a that includes a first resin and allows the coupling to the outer surface of the cover part 50, a second layer 41b that includes a second resin and allows coupling to the inner surface of the exterior film 20, and a third layer 41c that includes a third resin and is disposed between the first layer 41a and the second layer 41b.

For example, the first resin and the second resin may be as described above, and the third resin may include a resin selected from the group consisting of a resin having a melting point ($T_m$) of 145°C to 170°C, a resin having a melt flow rate (MFR) at 230°C of 2 g/10 min to 4 g/10 min, and a resin having a melting point ($T_m$) of 145°C to 170°C and a melt flow rate (MFR) at 230°C of 2 g/10 min to 4 g/10 min.

As another example, the first resin, the second resin, and the third resin may be selected so as to satisfy at least one selected from a relationship of Expression 3 below and a relationship of Expression 4 below.

$$[\text{Equation 3}]$$

$$T_{m3} > T_{m2} > T_{m1}$$

In Expression 3 above, $T_{m1}$ is a melting point of the first resin, $T_{m2}$ is a melting point of the second resin, $T_{m3}$ is a melting point of the third resin, and a unit is °C.

$$[\text{Equation 4}]$$

$$MFR_2 > MFR_1 > MFR_3$$

In Expression 4 above, $MFR_1$ is a melt flow rate of the first resin, $MFR_2$ is a melt flow rate of the second resin, $MFR_3$ is a melt flow rate of the third resin, and a unit is g/10 min.

In a case in which the connection part 340 is provided as a triple layer, the third layer 41c provided between the first layer 41a and the second layer 41b may be selected from one having a higher melting point and a lower melt flow rate than those of other layers. In this case, deformation of the connection part 40 due to heat may be minimized to secure not only the sealing strength but also insulating properties.

The third resin that may be applied to the third layer 41c may be, for example, a resin that satisfies the above-described melting point and melt flow rate range within the same type of resin range as the second resin, and for example, the third resin may be selected as a homopolyolefin-based resin that is a single polymer.

According to Embodiments 1 to 4 of the present invention, the connection parts 40, 140, 240, and 340 may be provided on the outer surface of the cover part 50 and may include connection portions 242, 43, 44, and 145 provided on at least one surface of the outer surfaces of the cover part 50 excluding the outer surface of the cover part 50 on which the coupling portion 41 is provided.

The connection portions 242, 43, 44, and 145 of the connection parts 40, 140, 240, and 340 may include a first layer that includes a first resin and has an outer surface that allows coupling to the inner surface of the exterior film and an inner surface that allows coupling to the outer surface of the cover part, like the first modified example of the coupling portion 41.

In addition, the connection portions 242, 43, 44, and 145 of the connection part 40, 140, 240, and 340 may include a first layer that includes a first resin and allows coupling to the outer surface of the cover part, and a second layer that includes a second resin, stacked on the outer surface of the first layer, and allows coupling to the inner surface of the exterior film.

In addition, the connection portions 242, 43, 44, and 145 of the connection part 40, 140, 240, and 340 may include a first layer that includes a first resin and allows coupling to the outer surface of the cover part, a second layer that includes a second resin and allows coupling to the inner surface of the exterior film, and a third layer that includes a third resin and is disposed between the first layer and the second layer.

The extension portion 54 may be at least partly embedded in the connection part 40, 140, 240, 340. The connection part may further include, in addition to the coupling portion 41, an inner portion 43 provided on the inward surface 51b of the cover portion 51 of the cover part 50, as in Embodiment 1 of FIG. 5, and an extension portion-side portion 44 which may extend along an inner surface of the extension portion. The extension portion-side portion 44 may be provided on the inner surface 54b (or inner circumferential surface) of the extension portion 54 of the cover part 50. Modified examples identical to or different from the first to third modified examples of the coupling portion 41 may be applied independently of the coupling portion 41 of the connection part 40. In general, the same modified example may be applied in that the cap 30 is manufactured by the insert injection.

In addition, as in the embodiment 2 illustrated in FIG. 9, the connection portion may further include, in addition to the coupling portion 41, an inner portion 43 provided on the inward surface 51b of the cover portion 51 of the cover part 50, an extension portion-side portion 44 provided on the inner surface 54b (or inner circumferential surface) of the extension portion 54 of the cover part 50, and an end-side connection part 145 covering an end of the extension portion 54 facing the electrode assembly 10. The end-side connection part 145 may cover the end surface 54c of the extension portion 54 of the cover part 50. Modified examples identical to or different from the first to third modified examples of the coupling portion 41 may be applied independently of the coupling portion 41 of the connection part 40. In general, the same modified example may be applied in that the cap 30 is manufactured by the insert injection.

In addition, as in the embodiment 3 illustrated in FIG. 10, the connection portion may further include, in addition to the coupling portion 41, an inner portion 43 provided on the inward surface 51b of the cover portion 51 of the cover part 50, an extension portion-side portion 44 provided on the inner surface 54b (or inner circumferential surface) of the extension portion 54 of the cover part 50, an end-side connection part 145 covering the end surface 54c of the extension portion 54 of the cover part 50, and an outer portion 242 covering the outward surface 51a of the outer surface of the cover portion 51 of the cover part 50 facing the outside of the electrode assembly 10, and modified examples identical to or different from the first to third modified examples of the coupling portion 41 may be applied independently of the coupling portion 41 of the connection part 240. In general, the same modified example may be applied in that the cap 30 is manufactured by the insert injection.

Evaluation Example

Hereinafter, an evaluation example of the coupling portion 41 of the connection part 340 illustrated in FIGS. 11 to 13 are specifically described so that a person of ordinary skill in the art to which the present invention pertains may easily perform the evaluation. The present invention may, however, be embodied in different forms and should not be construed as limited to the evaluation example set forth herein.

Evaluation Example 1

A polyethylene terephthalate (PET) film having a width of 266 mm, a height of 50 m, and a thickness of 12 $\mu$m and a nylon film having a width of 266 mm, a height of 50 m, and a thickness of 25 $\mu$m were stacked on one side of an aluminum alloy film having a width of 266 mm, a height of 50 m, and a thickness of 60 $\mu$m, and a polypropylene film having a width of 266 mm, a height of 50 m, and a thickness of 80 $\mu$m was stacked on the other side of the aluminum alloy film to prepare an exterior film having a structure of polyethylene terephthalate/nylon/aluminum alloy film/polypropylene film. Here, the polyethylene terephthalate film and the nylon film are a base material layer, the aluminum alloy thin film is a gas barrier layer, and the polypropylene film is a sealant layer.

Next, the coupling portions 41 and 41a of the cover part 50 and the connection part 340, which has the same shape as in FIG. 11, were prepared by insert injection using an aluminum metal plate having a thickness of 1 mm and a maleic anhydride-modified acid-modified polypropylene resin ($T_m$ 135°C, MFR 6 g/10 min) having a thickness of 2 mm, respectively.

An electrode assembly was prepared by simulating the assembling of a negative electrode, a positive electrode, and a porous polyethylene separator in a stacking manner, and after wrapping the electrode assembly with the exterior film, a secondary battery having a shape as illustrated in FIG. 2 was manufactured by using an assembly of a cover member and a gasket member. Here, sealing of the exterior film and the gasket member was performed for 5 seconds under conditions of 240°C and 0.3 MPa.

Evaluation Example 2

When manufacturing the cover part 50 and the connection part 340 by the insert injection, a heterogeneous insert injection using a non-stretched polypropylene resin (cPP, $T_m$ 140°C, MFR 10 g/10 min) that is randomly copolymerized with ethylene and an acid-modified polypropylene resin (PPa, $T_m$ 135°C, MFR 6 g/10 min) that is modified with maleic anhydride as the material of the connection part 340 was applied, and thus, a secondary battery was manufactured by the same method as in Evaluation Example 1, except that an acid-modified polypropylene resin layer (first layer 41a, 1 mm) is formed at a position that is in contact with the cover part 50, and an ethylene copolymerized polypropylene resin layer (second layer 41b, 1 mm) is formed at a position that is in contact with the inner surface of the exterior film, as illustrated in FIG. 12.

Experimental Example 1: Evaluation of Sealing Strength

For each secondary battery manufactured in the evaluation example, the sealing strength was evaluated using the following method.

After cutting the coupling portion of the connection part and the exterior film at intervals of 15 mm, the connection part was coupled to a lower jig of an UTM, and the exterior film was coupled to an upper jig, and then, low-speed sealing strength was calculated by calculating an average value in a section of 8 mm from a point exceeding 4.5 kgf/15 mm in a sealing strength graph measured by pulling in a direction of 180° at a speed of 5 mm/min at room temperature and 60°C.

[Table 1]

| | Room temperature sealing strength | Broken area | 60°C sealing strength | Broken area |
|---|---|---|---|---|
| Evaluation Example 1 | 78.08 | Exterior film-Gasket member | 30.80 | Exterior film-Gasket member |
| Evaluation Example 2 | 141.59 | Exterior film | 121.97 | Exterior film |

Referring to Table 1 above, in the case of Evaluation Example 1, the sealing strength was evaluated for the coupling portion of the connection part manufactured according to the first modified example, and when the room-temperature sealing strength and the high-temperature sealing strength are confirmed, it was confirmed that the required sealing strength level was exceeded, and thus, it was confirmed that minimum sealing strength to withstand the internal pressure may be secured when the coupling portion of the connection part is made of the resin having the characteristics described above.

In addition, in the case of Evaluation Example 3, the coupling portion of the connection part was manufactured according to the second modified example, and since the sealing strength is strong, it was confirmed that the sealing strength was excellent in that it is observed that the coupling portion of the connection part is not peeled off, but the exterior film is torn, and when configured as the double layer, it was confirmed that the sealing strength is excellent even at the high temperature, similar to that at room temperature.

While Embodiments of the present invention have been described with reference to the specific embodiments, it will be apparent to those skilled in the art that various changes and modifications may be made without departing from the spirit and scope of the invention as defined in the following claims.

[Description of the Symbols]

| | | | |
|---|---|---|---|
| 1: | Battery pack | 2: | Packaging |
| 3, 103, 203, 303: | Secondary battery | 10: | Electrode assembly |
| 11: | Electrode tab | 20: | Exterior film |
| 30, 130, 230, 330: | Cap | 40, 140, 240: | Connection part |
| 41: | Coupling portion | 41a: | First layer |
| 41b: | Second layer | 41c: | Third layer |
| 242: | Outer portion | | |
| 43: | Inner portion | 44: | Extension portion-side portion |
| 145: | End-side portion | 50: | Cover part |
| 51: | Cover portion | 51a: | Outward surface |
| 51b: | Inward surface | 54: | Extension portion |
| 54a: | Outer surface | 54b: | Inner surface |
| 54c: | End surface | 55: | First extension portion |
| 56: | Second extension portion | 57: | Third extension portion |
| 58: | Fourth extension portion | 60, 160: | Terminal part |
| 161: | Body part | 162: | Outer part |
| 163: | Inner part | 170: | Busbar |
| 171: | First metal part | 172: | Second metal part |

(continued)

| 173: | Third metal part | 174: | Fourth metal part |
|---|---|---|---|

**Claims**

1. A secondary battery comprising:

   an electrode assembly having two end faces and extending in an extension direction between the two end faces;
   an exterior film configured to surround a portion of the electrode assembly so as to form at least one opening; and
   a cap configured to close and/or seal the at least one opening,
   wherein the cap comprises:

   a cover part configured to cover one of the two end faces of the electrode assembly;
   a connection part provided between the cover part and the exterior film and is configured to be coupled to the exterior film; and
   a terminal part which is electrically connected to the electrode assembly and extends outside of the cover part and/or the connection part.

2. The secondary battery of claim 1, wherein the terminal part extends through the connection part and/or the cover part in the extension direction, and has a cross-sectional area that is constant within the connection part and/or the cover part, wherein the cross-sectional area is determined perpendicular to the extension direction.

3. The secondary battery of claim 1 or 2, wherein the terminal part terminates at a flat surface that is proximal to the electrode assembly and faces the electrode assembly.

4. The secondary battery of any of the preceding claims, wherein the terminal part extends through the connection part and/or the cover part in the extension direction, and comprises:

   a body part disposed within a through-hole through the connection part and/or the cover part; and
   an outer part extending from the body part to the outside of the connection part and/or the cover part,
   wherein a cross-sectional area of the outer part is greater than that of the through-hole so that movement of the terminal part in the extension direction toward the electrode assembly is restricted.

5. The secondary battery of claim 4, wherein the terminal part further comprises:

   an inner part extending from the body part toward the electrode assembly,
   wherein the inner part is provided and/or deformed so as to have a cross-sectional area greater than the through-hole.

6. The secondary battery of claim 5, further comprising a busbar electrically and/or physically connecting between the terminal part and the electrode assembly.

7. The secondary battery of claim 6, wherein the busbar engages with the terminal part so as to at least partly extend between the terminal part and the cover part and/or the connection part.

8. The secondary battery of claim 6 or 7, wherein the terminal part extends through the busbar.

9. The secondary battery of any of claims 6 to 8, wherein the busbar comprises:

   a first busbar part that is in physical contact with the terminal part; and
   a second busbar part extending from the first busbar part toward the electrode assembly.

10. The secondary battery of any of claims 6 to 9, wherein the busbar extends toward the electrode assembly in a folded manner.

11. The secondary battery of any of claims 6 to 10, wherein the electrode assembly comprises a plurality of electrode tabs each physically and/or electrically coupled to the busbar.

12. The secondary battery of any of the preceding claims, wherein the cover part has an outer circumferential surface extending along a circumference of the electrode assembly around the extension direction, and the connection part comprises a coupling portion provided on the outer circumferential surface of the cover part and configured to be coupled to the exterior film.

13. The secondary battery of claim 12, wherein the coupling portion has a polygonal annular shape, a rectangular annular shape, an elliptical annular shape, a circular annular shape, a ring shape or a combination thereof.

14. The secondary battery of any of the preceding claims, wherein the cover part comprises:

    a cover portion having an outward surface that faces away from the electrode assembly; and
    an extension portion extending from the cover portion toward the electrode assembly,
    wherein the connection part extends on an outer surface of the extension portion.

15. The secondary battery of claim 14, wherein the extension portion comprises:

    a first extension portion; and
    a second extension portion provided at a predetermined distance from the first extension portion and extending parallel thereto toward the electrode assembly.

16. The secondary battery of claim 15, wherein the extension portion comprises:

    a third extension portion extending between the first extension portion and the second extension portion; and
    a fourth extension portion extending between the first extension portion and the second extension portion, and provided at a predetermined distance from the third extension portion, wherein the third and fourth extension portions extend in parallel toward the electrode assembly.

17. The secondary battery of claim 16, wherein the first to fourth extension portions are connected to each other to form a rectangular annular shape when viewed in a direction parallel to the extension direction.

18. The secondary battery of any of claims 14 to 17, wherein the cover portion has a plate shape, and the extension portion extends from an edge of the cover portion.

19. The secondary battery of any of claims 14 to 18, wherein, in the extension direction away from the electrode assembly, the cover part extends as far as the connection part, or farther away than the connection part.

20. The secondary battery of any claims 14 to 19, wherein the connection part comprises an outer portion configured to at least partly cover the outward surface.

21. The secondary battery of any of claims 14 to 20, wherein the cover portion comprises an inward surface that is opposite to the outward surface and faces the electrode assembly, and the connection part comprises an inner portion configured to cover the inward surface.

22. The secondary battery of any of claim 14 to 21, wherein the extension portion is at least partly embedded in the connection part.

23. The secondary battery of claim 22, wherein the connection part comprises:

    an extension portion-side portion extending along an inner surface of the extension portion; and/or
    an end-side portion covering an end of the extension portion facing the electrode assembly.

24. The secondary battery of any of the preceding claims, wherein the exterior film is made of an elastic material or elastic laminate configured to surround the electrode assembly.

25. The secondary battery of any of the preceding claims, wherein the cover part is at least partly embedded in the connection part, by being inserted into a recessed portion and/or an opening formed in the connection part.

26. The secondary battery of any of the preceding claims,

wherein the secondary battery further comprises an insulation member disposed between the cover part and the electrode assembly; and/or
wherein the connection part is made of an electrically insulating material and extends continuously between the cover part and the electrode assembly.

27. A method for manufacturing a secondary battery, the method comprising:

providing an electrode assembly having two end faces and extending in an extension direction between the two end faces;
surrounding a portion of the electrode assembly using an exterior film so as to form an opening; and
closing and/or sealing the opening formed by the exterior film using a cap,
wherein the cap comprises:

a cover part configured to cover one of the two end faces of the electrode assembly;
a connection part provided between the cover part and the exterior film and is configured to be coupled to the exterior film; and
a terminal part which is electrically connected to the electrode assembly and extends on an outside of the cover part and/or the connection part .

28. A battery pack comprising:

a secondary battery according to one of claims 1 to 26; and
a packaging configured to accommodate the secondary battery.

FIG.1

<u>3</u>

FIG.2

FIG.3

FIG.4

FIG.5

FIG.6

FIG.7

103

44

145

41

170

140(130)

41

20

145

170

41

50

160(130)

41

10

11

FIG.8

Z

X

Y

FIG.9

FIG.10

EP 4 553 972 A1

303

41(340)

41a

54(50)

51(50)

160(330)

51a
51b

54a

41(340) 54c   54b

20

174
173
172
171
10

11

FIG.11

240(230)

303

41(340)

41a 41b

54(50)

51(50)

160(330)

51a
51b

54a

41(340) 54c 54b

20

174
173
172
171
10

11

170

240(230)

FIG.12

FIG.13

Europäisches
Patentamt

European
Patent Office

Office européen
des brevets

# EUROPEAN SEARCH REPORT

**Application Number**

EP 24 21 1555

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/187792 A1 (KIM JI HYUNG [KR] ET AL) 15 June 2023 (2023-06-15) * the whole document * | 1-28 | INV. H01M50/15 H01M50/166 H01M50/176 |
| E | WO 2024/248570 A1 (LG ENERGY SOLUTION LTD [KR]) 5 December 2024 (2024-12-05) * the whole document * | 1-28 | H01M50/186 H01M50/55 H01M50/553 |
| A | US 10 985 432 B2 (SAMSUNG SDI CO LTD [KR]) 20 April 2021 (2021-04-20) * the whole document * | 1-28 | |

**TECHNICAL FIELDS SEARCHED (IPC)**

H01M

The present search report has been drawn up for all claims

| Place of search | Date of completion of the search | Examiner |
|---|---|---|
| Munich | 4 March 2025 | Swiatek, Ryszard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 1555

This annex lists the patent family members relating to the patent documents cited in the above-mentioned European search report.
The members are as contained in the European Patent Office EDP file on
The European Patent Office is in no way liable for these particulars which are merely given for the purpose of information.

04-03-2025

| Patent document cited in search report | Publication date | Patent family member(s) | Publication date |
|---|---|---|---|
| US 2023187792 A1 | 15-06-2023 | CN 116264315 A<br>KR 20230089378 A<br>US 2023187792 A1 | 16-06-2023<br>20-06-2023<br>15-06-2023 |
| WO 2024248570 A1 | 05-12-2024 | NONE | |
| US 10985432 B2 | 20-04-2021 | CN 105609862 A<br>EP 3024054 A1<br>HU E059388 T2<br>KR 20160059370 A<br>PL 3024054 T3<br>US 2016141591 A1 | 25-05-2016<br>25-05-2016<br>28-11-2022<br>26-05-2016<br>25-07-2022<br>19-05-2016 |

EPO FORM P0459